# EUROPÄISCHE PATENTSCHRIFT

(11) **EP 0 514 379 B1**
(45) Veröffentlichungstag und Bekanntmachung des Hinweises auf die Patenterteilung: **14.09.1994**
(21) Anmeldenummer: 91900728.6
(22) Anmeldetag: 27.12.1990
(51) Int. Cl.: B01L 3/02

(54) **MEHRKANALPIPETTE**
MULTI-CHANNEL PIPETTE
PIPETTE A CANAUX MULTIPLES

(30) Priorität: 07.02.1990 DE 4003591
(43) Veröffentlichungstag der Anmeldung: 25.11.1992
(73) Patentinhaber: Badischer Normteile- und Apparatebau GmbH & Co KG, 77901 Lahr /Schwarzwald (DE)
(72) Erfinder: Spindler, Jörg, D-6900 Heidelberg (DE)
(74) Vertreter: Alber, Norbert
(86) Internationale Anmeldenummer: DE9001001
(87) Internationale Veröffentlichungsnummer: WO9112077

(56) Entgegenhaltungen:
- EP-A- 0 348 612
- FR-A- 2 171 453
- FR-A- 2 525 770
- GB-A- 1 601 242

## Beschreibung

Die Erfindung betrifft eine Mehrkanalpipette mit einer sehr großen Zahl, insbesondere sechsundneunzig parallelen Pumpenzylindern und darin passenden Kolben, die in einem Raster, des dem der Pumpenzylinder entspricht, insbesondere acht mal zwölf, zu einer Einheit gekoppelt sind, die in Zylinderachslängsrichtung relativ zu den Pumpenzylindern verstellbar ist, mit konischen Pipettenspitzenhaltern an den unteren Enden der Pumpenzylindern, auf die Pipettenspitzen aufsteckbar sind, und mit einem Abwerfer für die aufgesteckten Pipettenspitzen.

Eine solche Mehrkanalpipette ist aus der GB-A-16 01 242 bekannt. Sie hat eine Batterie einzeln gehalterter Pumpenzylinder und eine Kolbeneinheit, die sich an vier gleichlaufenden Gewindespindeln relativ zu den Pumpenzylindern verstellen läßt. Zum Aufstecken von Pipettenspitzen wird die Pumpenzylinderbatterie mit den konische Pipettenspitzenhaltern an den unteren Enden der Pumpenzylinder auf die Pipettenspitzen niedergefahren. Das Abwerfen der Pipettenspitzen erfolgt manuell mit einer nockenbetätigten Platte.

Aufgabe der Erfindung ist es, den Aufbau und die Bedienung einer Pipette der genannten Art zu vereinfachen.

Diese Aufgabe wird dadurch gelöst, daß die Pumpenzylinder als Öffnungen in einem Zylinderblock ausgebildet sind, daß die Kolbeneinheit an zugleich eine Stützfunktion erfüllenden parallelen Führungsstangen verstellbar ist, daß die ganze Mehrkanalpipette höhenverstellbar an einem Ständer angebracht ist, daß die Pipettenspitzen aus einer an der Basis des Ständers befindlichen Halterung durch relative Höhenverstellung zwischen Zylinderblock und Halterung, vorzugsweise Niederfahren der ganzen Mehrkanalpipette, auf die Pipettenspitzenhalter aufsteckbar sind, und daß der Abwerfer ein Stellglied aufweist, das bei Höhenverstellung der Mehrkanalpipette auf einen Anschlag trifft, so daß der Abwerfer festgehalten wird, während die Pipettenspitzen abgeworfen werden.

Bei einer bevorzugten Bauform hat die Pipette ein Gestell mit vier im Rechteck angeordneten, parallelen vertikalen Führungsstangen, an denen der Zylinderblock und eine Motorplattform mit einem Motor für den Antrieb der Kolbeneinheit starr und die Kolbeneinheit verstellbar angeordnet sind.

Die Öffnungen in dem Zylinderblock können abgestuft sein, und auf einer Stufe ein Dichtring sitzen, der den Kolben abdichtet. Vorzugsweise wird der Dichtring durch eine in dem Abschnitt größeren Durchmessers der Öffnung aufgenommene Feder niedergespannt und gepreßt. Die Federn aller oder jeweils einer Reihe von Öffnungen können sich an einem außen an dem Zylinderblock angebrachten, die Öffnungen wenigstens zum Teil überdeckenden Widerlager z. B. in Form einer Platte, eines Stegs o. ä. abstützen. Mit dieser Dichtringanordnung wird eine einwandfreie Abdichtung der Kolben bewirkt, die zu der Genauigkeit der Volumendosierung mit der erfindungsgemäßen Pipette beiträgt.

An der Unterseite des Zylinderblocks können auf gleicher Achse mit den Öffnungen konische Pipettenspitzenhalter ansetzen, die einen gegenüber dem Durchmesser der Öffnungen vorzugsweise verjüngten Kanal haben. Mit den Pipettenspitzenhaltern können vorbereitete Sätze von Pipettenspitzen einfach auf die Pipette aufgesteckt werden.

Die Kolben sind vorzugsweise an einer Hubplatte angebracht, die mittels eines Gewindetriebs motorgetrieben in Längsrichtung der Führungsstangen verfahrbar ist. Die Führungsstangen gewährleisten zugleich eine hohe Stabilität des Pipettenaufbaus und eine äußerst präzise Parallelführung der Hubplatte. Der Gewindetrieb bedingt eine starke Hubuntersetzung und entsprechende Genauigkeit der Volumendosierung.

Die Kolben können starr an der Hubplatte angebracht sein, wozu sie insbesondere im Durchmesser abgestuft und mit einem Schaft geringeren Durchmessers passend in Montagebohrungen der Hubplatte aufgenommen sein können. Der Schaft kann an einem aus der Hubplatte herausstehenden Ende mit einem Gewinde versehen sein, auf das sich eine Mutter aufschrauben läßt. Die Kolben sind so auf unaufwenige Weise präzise positioniert und sicher an der Hubplatte angebracht. Man erreicht damit eine sehr hohe Genauigkeit in der Volumendosierung und eine ausgezeichnete Übereinstimmung der in den einzelnen Kanälen pipettierten Flüssigkeitsmengen. Problematisch ist aber, daß bei der Herstellung der Pumpenzylinder und Kolben sehr geringe Maßtoleranzen eingehalten werden müssen. Der Laufwiderstand der Kolben in den Pumpenzylindern ist hoch. Bei Unterbrechung des Pipettierbetriebs setzen sich die Kolben in den Pumpenzylindern regelrecht fest, so daß ein hohes Anfahrmoment aufgebracht werden muß. Die zu installierende Motorleistung für den Antrieb der Hubplatte ist entsprechend hoch.

Aus der DE-PS 23 04 473 ist eine Mehrkanalpipette bekannt, bei der die Kolben mit seitlichem Bewegungsspiel an einer Hubplatte angebracht sind. Die Hubplatte ist zweigeteilt. Sie besteht aus einer Aufnahmeplatte mit Bohrungen, die das dem Kolbenkörper abgewandte Ende des Kolbenschafts mit Spiel aufnehmen, und einer die Aufnahmeplatte abdeckenden Stützplatte, gegen die die Kolben unter Einschaltung je einer Lagerkugel durch eine Feder vorgespannt sind. Die Lagerkugeln gewährleisten eine leichte seitliche Beweglichkeit der Kolben im Rahmen des von den Bohrungen gebotenen Spiels. Die Kraft der die Kolben vorspannenden Federn soll so gewählt sein, daß sie die Laufreibung der Kolben übersteigt, so daß keine Axialbewegung der Kolben relativ zu der Hubplatte stattfindet.

Nachteilig ist der komplizierte, viele Einzelteile erfordernde Aufbau der aus der DE-PS 23 04 473 bekannten Kolbenbefestigung an einer Hubplatte. Die die Kolben beaufschlagenden Federn müssen sehr stark ausgelegt sein, da sie im Saughub der Pipette, d. h. im Meßhub, eine bündige Anlage der Kolben an der Stützplatte unbedingt sicherstellen müssen. Ein Einfedern könnte zu Meßfehlern führen. Die Montage einer größeren Zahl von Lagerkugeln und starker Federn ist aber aufwendig und fehlerträchtig. Nachteilig ist auch, daß sich die Kolben im Rahmen des bestehenden Spiels zwar seitlich verschieben, aber nicht neigen lassen, weshalb bei Abweichung der Kolben- oder Pumpenzylinderachse von der axialen Hubrichtung der Pipette ein unerwünscht hoher Laufwiderstand auftreten kann.

Bei einer bevorzugten Variante der erfindungsgemäßen Mehrkanalpipette sind dagegen die Kolben mit seitlichem Verschiebespiel und allseitigem Neigungsspiel an der Hubplatte angebracht. Dadurch ist bei garantiertem Gleichlauf der Kolben im Saughub der Laufwiderstand der Kolben in den Pumpenzylindern minimal.

In einer bevorzugten Ausführungsform sind die Kolben mit Drehspiel um ihre Achse an der Hubplatte angebracht. Es ist so auch eine Ausrichtbewegung der Kolben in Umfangsrichtung möglich.

Vorzugsweise sind die Kolben durch ein Federelement beaufschlagt, das die Kolben in normalerweise axial fester Anordnung an der Hubplatte hält, bei außergewöhnlich hohem Laufwiderstand der Kolben z. B. nach längerem Stillstand der Pipette aber unter Einfederung eine axiale Relativbewegung von Kolben und Hubplatte ermöglicht. Das ist erwünscht, um beim Anfahren der Hubplatte aus dem Stand die Kolbenbewegung zu puffern und durch Spannen der Druckfedern mehr Antriebskraft auf die Kolben aufzubringen, die in ihrer Bewegung in den Pumpenzylindern gehemmt sind. Das gilt insbesondere beim Anfahren im Ausgabehub nach längerem Stillstand der Pipette. Im laufenden Betrieb sollten die Kolben hingegen eine fixe Position an der Hubplatte haben, um beispielsweise ein etappenweises Ausgeben von Flüssigkeit mit hoher Genauigkeit zu ermöglichen.

In einer bevorzugten Ausführungsform haben die Kolben einen Schaft, der mit Spiel durch eine Montageöffnung in der Hubplatte hindurchgreift und auf der dem Kolbenkörper abgewandten Seite über die Hubplatte übersteht. Die Hubplatte trägt Abstützteile, die mit geringer Breite um je einen der überstehenden Schaftabschnitte herumliegen, wobei letztere mit einem Auflager verbunden sind, das radial überstehend an dem Abstützteil zu liegen kommt. Der Schaft kann so mit seinem Auflager auf dem schmalen Abstützteil in alle Richtungen gekippt sowie um seine Achse gedreht werden, wodurch das gewünschte Neigungsspiel und Drehspiel in konstruktiv unaufwendiger Weise sichergestellt ist.

Die Abstützteile sollten mit radialem Spiel um den Schaft der Kolben herumliegen, um den Kolben das gewünschte seitliche Verschiebespiel zu lassen. Aus diesem Grund ist auch eine Anordnung von Vorteil, bei der die Abstützteile allseitiges Verschiebespiel an der Hubplatte haben.

Das Abstützteil kann sich von der Hubplatte zu dem Auflager hin verjüngen, so daß es dem Auflager Platz zum seitlichen Abkippen läßt. In einer bevorzugten Ausführungsform ist das Abstützteil ein handelsüblicher oder auch eigens gefertigter Konusring.

Das Auflager ist vorzugsweise lösbar an dem Schaft angebracht. Das erleichtert die Montage der Kolben an der Hubplatte. Als Auflager kommt insbesondere eine auf den Schaft aufgeschraubte Mutter, ein an dem Schaft festsitzender Sprengring o. ä. in Betracht.

Die Kolben sind vorzugsweise durch eine Druckfeder in Anlage an dem Abstützteil vorgespannt. Die Druckfeder hält die Kolben an der Hubplatte fest und verhindert eine unnötige Kolbenverschiebung und/oder Kolbenneigung. In einer bevorzugten Ausführungsform sind die Kolben im Durchmesser abgestuft, so daß sie einen einen kleineren Durchmesser als der Kolbenkörper aufweisenden Schaft haben. Um den Schaft herum liegt die Druckfeder, die sich einends an der Stufe zwischen Kolbenkörper und Schaft und andernends an der Hubplatte abstützt. Vorzugsweise ist die Druckfeder in einer Montagebohrung der Hubplatte aufgenommen. Die Druckfeder spannt die Kolben in eine bündige Anlagestellung ihres Auflagers an dem Abstützteil vor. Im Saughub der Mehrkanalpipette, d. h. im Meßhub, ist durch diese Anlagestellung ein 100 %iger Gleichlauf aller Kolben sichergestellt. Die Kolben werden zwangsweise von der Hubplatte mitgenommen, ohne daß die Gefahr eines Einfederns der Druckfedern und einer daraus sich ergebenden Abweichung vom Gleichlauf der Kolben besteht. Aus diesem Grund können die Druckfedern auch relativ schwach ausgelegt sein. Bei dem in Gegenrichtung erfolgenden Entleerhub zur Ausgabe pipettierter Flüssigkeit sollen die Druckfedern die Kolben im Normalbetrieb fest an der Hubplatte halten, um beispielsweise ein etappenweises Ausgeben von Flüssigkeit mit hoher Meßgenauigkeit zu ermöglichen. In Fällen, wo es auf eine genau gleichzeitige Flüssigkeitsabgabe aus allen Kanälen nicht ankommt, sowie beim Anfahren im Ausgabehub nach längerem Stillstand der Pipette kann ein Einfedern der Druckfedern aber erwünscht sein, um die Kolbenbewegung zu puffern und die Antriebskraft auf die gehemmten Kolben zu erhöhen. Spätestens am Ende des Hubs stellen die Druckfedern alle Kolben auf gleiche Höhe zurück, so daß die Ausgangsposition aller Kolben im folgenden gleich ist.

Die Hubplatte kann mit Linearkugellagern oder Gleitführungsbuchsen an den Führungsstangen geführt sein. Dadurch ist eine präzise, reibungsarme Parallelführung der Hubplatte gewährleistet.

Der Gewindetrieb kann eine einfache Gewindespindel oder Kugelgewindespindel enthalten. Letztere ist praktisch spielfrei und damit für eine präzise Volumendosierung ausgezeichnet geeignet. Allerdings ist der mit einer Kugelgewindespindel einhergehende bauliche Aufwand beträchtlich, weshalb in einer bevorzugten Variante der Erfindung eine einfache Gewindespindel zum Einsatz kommt und zugleich die Stellbewegung der Hubplatte in einer den Totgang des Gewindetriebs berücksichtigenden Weise gesteuert wird. Das geschieht vorzugsweise durch geeignete Laufsteuerung der Hubplatte z. B. anhand ihres Laufwiderstands und/oder optoelektronisch, beispielsweise mittels einer Lichtschranke, die die Nullstellung der Volumenmessung im Saughub markiert, nachdem der Totgang des Gewindetriebs zurückgelegt ist. Diese Art der Steuerung erlaubt folgenden Arbeitsablauf. Man läßt die Kolben im Saughub eine kurze Vorlaufstrecke zurücklegen, um einen eventuellen anfänglichen Totgang des Gewindetriebs zu überwinden, bis der Gewindeanschlag erreicht ist bzw. die Lichtschranke passiert und bei der Volumenmessung mit Null (Reset) begonnen wird. Sodann wird Flüssigkeit im eigentlichen Meßhub angesaugt. Nach Umsetzen der Pipette fahren die Kolben zum Abgeben der Flüssigkeit um genau den Meßhub in die Zylinder ein, was bei Antrieb der Hubplatte durch einen Gleichstrommotor mit Winkelschrittgeber oder Schrittmotor durch Abzählen der für den Meßhub vollführten Schritte sowie anhand des erneuten Passierens der Lichtschranke präzise gesteuert werden kann. Sodann werden die Kolben zum gänzlichen Entleeren der Pipettenkanäle um die Vorlaufstrecke zurückverfahren (Blow out). Schließlich fahren die Kolben um eine vorgegebene Strecke im Saughub zurück, worauf die Pipette für den nächsten Pipettiervorgang bereit ist. Bei alledem wird die Genauigkeit der Volumendosierung nicht durch den Totgang des Gewindetriebs beeinflußt, so daß man mit einer unaufwendigen Gewindespindel auskommt, ohne die Genauigkeit der Volumendosierung zu beeinträchtigen. Eine entsprechende den Gewindetotgang berücksichtigende Steuerung der Hubplatte ist auch für das etappenweise Ausgeben von pipettierter Flüssigkeit bevorzugt.

Der Zylinderblock ist vorzugsweise auf die Führungsstangen aufgesteckt und lösbar fest daran angebracht. Auf diese Art kann der Zylinderblock für Wartungszwecke einfach demontiert werden. Der zum Antrieb der Hubplatte dienende Motor ist vorzugsweise mittels einer Motorplattform oberhalb der Hubplatte an den Führungsstangen angebracht. Dadurch wird der Aufbau der Mehrkanalpipette stabilisiert und die Führungsgenauigkeit verbessert.

Für den Antrieb der Hubplatte kommt insbesondere ein getriebeuntersetzter Gleichstrommmotor mit einem integrierten Winkelschrittgeber hoher Auflösung in Betracht. Durch die Getriebeuntersetzung des Motors und des Gewindetriebs wird eine sehr hohe Genauigkeit der Volumenmessung erreicht. So entsprechen bei einem Ausführungsbeispiel, dessen Winkelschrittgeber eine LED-Scheibe mit 500 Unterteilungen auf 360° hat, bei Untersetzung 1 : 10 einem µl Saugvolumen 254 Mikroschritte des Gleichstrommotors. Zu der Getriebeeinheit gehört vorzugsweise ein Lineargetriebe, das der Hubplatte bei bestehender Getriebeverbindung ein geringes seitliches Bewegungsspiel läßt. Dadurch besteht die Möglichkeit einer Ausrichtbewegung, und es ist ein reibungsarmer Lauf gewährleistet.

Unterhalb des Zylinderblocks kann ein Aufsatzteil höhenverstellbar und arretierbar auf die Führungsstangen aufgezogen sein, das über eine Mikrotiterplatte paßt. Durch die Anbringung des Aufsatzteils an den Führungsstangen wird eine zusätzliche Stabilisierung des Pipettenaufbaus erreicht. Das Aufsatzteil erlaubt es, die Pipette mit genauer Ausrichtung ihrer Kanäle über die Aufnahmeöffnungen einer Mikrotiterplatte zu stellen. Die Höhenverstellbarkeit des Aufsatzteils dient dazu, einen wohldefinierten Abstand der Pipettenspitzenenden von dem Flüssigkeitsspiegel in den Aufnahmeöffnungen einzustellen, so daß eine Verfälschung der Volumendosierung durch Eintauchen der Pipettenspitzenenden sicher vermieden wird. Vorzugsweise ist das Aufsatzteil mit Federn nach unten vorgespannt, die das Gewicht des Pipettenoberteils kompensieren. Es ist so eine Höhenverstellung mit minimalem Kraftaufwand möglich.

Die Führungsstangen sind vorzugsweise abgestuft und die Motorplattform, der Zylinderblock und ein den Abwerfer halternder Rahmen gegebenenfalls unter Zwischenschaltung eines oder mehrerer Abstandshalter an einer Schulter der Führungsstangen abgestützt. Die Fixierung der Teile kann mit auf beiden Endabschnitten der Führungsstangen aufschraubbaren Muttern erfolgen. Diese Ausführungsvariante ermöglicht eine einfache Montage und Demontage der Pipette durch Anziehen bzw. Lösen einiger weniger Muttern. Sie bietet darüber hinaus den Vorteil, daß die beim Verfahren der Hubplatte auftretenden Kräfte an den Schultern der Führungsstangen problemlos abgefangen werden und die nötige Steifigkeit und Führungsgenauigkeit gewährleistet ist.

Die erfindungsgemäße Pipette kann manuell oder motorisch höhenverstellbar an dem Ständer angebracht sein. Dadurch läßt sich in einfacher, bequemer Weise die Pipettierhöhe verstellen. Auch werden durch Höhenverstellung der Pipette aus einer Halterung Pipettenspitzen aufgenommen und auf Pipettenspitzenhaltern der Pipette aufgesteckt. Schließlich wird auch die Betätigung eines die Pipettenspitzen wieder lösenden Abwerfers von einer Höhenverstellbewegung der Pipette abgeleitet.

Zur Höhenverstellung kann ein Kniehebelmechanismus vorgesehen sein, der am Tiefpunkt der Pipette in Strecklage kommt. Damit wird am Tiefpunkt die höchste Stellkraft auf die Pipette ausgeübt, was für die Aufnahme von Pipettenspitzen aus einer Halterung besonders günstig ist.

Als Stellglied des Abwerfers kann eine Lasche oder eine oder mehrere durch den Zylinderblock und gegebenenfalls die Hubplatte und die Motorplattform hindurchgeführte Betätigunsstange(n) vorgesehen sein. Die Betätigungsstangen können mit dem Abwerfer fest verbunden und mit Federn versehen sein, die den Abwerfer in die Ruhestellung vorspannen.

Der Anschlag, auf den das Stellglied des Abwerfers bei Höhenverstellung der Pipette trifft, kann ein Festanschlag oder höhenverstellbaren Anschlag oder vorzugsweise geschaltet in die Bahn des Stellglieds und aus dieser heraus bewegbarer Anschlag sein. Das ist für eine bequeme Handhabung der Pipette und eine weitgehende Automatisierung des Pipettiervorgangs bevorzugt. Ein besonderer Motor ist für die Abwerferbetätigung nicht erforderlich und der Installationsaufwand entsprechend gering.

Der Abwerfer und/oder das Stellglied können eine Rampe o. ä. aufweisen, derart, daß bei Betätigung des Abwerfers die Pipettenspitzen gestaffelt, insbesondere reihenweise von den Pipettenspitzenhaltern gelöst werden. Der Abwerfer schert also die Pipettenspitzen von den Pipettenspitzenhaltern ab. Zur Betätigung des Abwerfers bracht es daher nur wenig Kraft.

An dem Ständer kann unterhalb der Pipette ein Wechselmechanismus insbesondere in Form eines horizontalen Drehtellers vorgesehen sein, der eine oder mehrere Halterungen für durch Niederfahren der Pipette entnehmbare Pipettenspitzen, Mikrotiterplatten o. ä. tragen kann. Diese Anordnung ermöglicht eine weitgehende Automatisierung des Pipettierablaufs.

Um ein Verkanten der Pipettenspitzen in der Halterung bei der Entnahme mit der niederfahrenden Pipette zu vermeiden, ist in diesem Stadium eine exakte Horizontallage des Drehtellers erforderlich. Das kann durch eine entsprechend präzise Lagerung des Drehtellers gewährleistet sein, insbesondere durch Lagerung auf einer planen, selbstschmierenden Gleitschicht an dem Ständer oder Drehteller. Alternativ kann sich der Drehteller federnd an einer planen Anlagefläche abstützen, an der er bei Beaufschlagung mit der niederfahrenden Pipette einfedernd zur Anlage kommt. Letztere Variante ist unaufwendiger im Aufbau.

Die Halterung für die Pipettenspitzen kann diese im Raster der Pipettenkanäle aufnehmende Bohrungen aufweisen, in denen eine vorzugsweise abgefederte Ausrichtbewegung der Pipettenspitzen möglich ist. Zur Abfederung kann die Halterung mit einer im Raster der Bohrungen gelochten dünnen Schicht eines elastischen Materials, vorzugsweise einem Flachgummi, belegt sein. Durch die Möglichkeit einer abgefederten Ausrichtbewegung der Pipettenspitzen werden Fertigungstoleranzen ausgeglichen. Der Anpreßdruck verteilt sich gleichmäßig auf die Pipettenspitzen, und es ist sichergestellt, daß sämtliche Pipettenspitzen beschädigungsfrei an den Pipettenspitzenhaltern festsitzen.

Die Erfindung wird im folgenden anhand von in den Zeichnungen dargestellten Ausführungsbeispielen näher erläutert. Es zeigen:
- Fig. 1: die Vorderansicht einer ersten Mehrkanalpipette mit einem Aufsatzteil, einem Abwerfer für Pipettenspitzen, einem Zylinderblock, einer starr daran angebrachte Kolben tragenden Hubplatte und einer Motorplattform, die axial beabstandet auf vier Führungsstangen aufgezogen sind;
- Fig. 2: eine Vorderansicht des Zylinderblocks;
- Fig. 3: eine Draufsicht auf den Zylinderblock mit Blick in Richtung III von Fig. 2;
- Fig. 4: einen vergrößerten axialen Längsschnitt durch eine Zylinderbohrung des Zylinderblocks, die eine Feder enthält, mit der ein Dichtring beaufschlagt ist;
- Fig. 5: die Vorderansicht eines Stegs, an dem die Federn einer Reihe von Zylinderbohrungen abgestützt sind;
- Fig. 6: eine Seitenansicht des Stegs mit Blick in Richtung VI von Fig. 5;
- Fig. 7: eine Draufsicht auf den Steg mit Blick in Richtung VII von Fig. 5;
- Fig. 8: eine Vorderansicht der Hubplatte;
- Fig. 9: eine Draufsicht auf die Hubplatte mit Blick in Richtung IX von Fig. 8;
- Fig. 10: einen an der Hubplatte gehalterten Kolben;
- Fig. 11: die Vorderansicht eines an der Hubplatte anzubringenden Trägerrahmens, teilweise im Schnitt nach XI - XI von Fig. 12;
- Fig. 12: eine Draufsicht auf den Trägerrahmen mit Blick in Richtung XII von Fig. 11;
- Fig. 13: eine Vorderansicht eines Rahmens, an den der Abwerfer gehaltert ist, teilweise im Schnitt nach XIII - XIII von Fig. 14;
- Fig. 14: eine Draufsicht auf den Rahmen mit Blick in Richtung XIV von Fig. 13;
- Fig. 15: eine Draufsicht auf den Abwerfer;
- Fig. 16: eine Vorderansicht des Aufsatzteils;
- Fig. 17: eine Draufsicht des Aufsatzteils mit Blick in Richtung XVII von Fig. 16;
- Fig. 18: eine Führungsstange;
- Fig. 19: die Vorderansicht einer zweiten Mehrkanalpipette mit einer Halterung für aufzusteckende Pipettenspitzen, einem Rahmen, einem Zylinderblock, einer mit Neigungsspiel daran angebrachte Kolben tragenden Hubplatte und einer Motorplattform, die axial beabstandet auf vier Führungsstangen aufgezogen sind;
- Fig. 20: eine Vorderansicht des Zylinderblocks;
- Fig. 21: eine Draufsicht auf den Zylinderblock mit Blick in Richtung XXI von Fig. 20;
- Fig. 22: einen Schnitt durch die Hubplatte im Bereich einer Montagebohrung für einen Kolben;
- Fig. 23: eine Draufsicht auf den Rahmen;
- Fig. 24: eine Draufsicht auf den an dem Rahmen angebrachten Abwerfer;
- Fig. 25: eine Draufsicht auf die Halterung für aufzusteckende Pipettenspitzen;
- Fig. 26: einen Schnitt durch die Halterung nach XXVI - XXVI von Fig. 25;
- Fig. 27: eine an einem Hubständer hängende, von Hand in der Höhe verstellbare zweite Mehrkanalpipette;
- Fig. 28: die ausschnittsweise Vorderansicht einer dritten Mehrkanalpipette mit einer abgewandelten Anbringung von Rahmen, Zylinderblock, Kolbenplatte und Motorplattform an den Führungsstangen; und
- Fig. 29: eine an einem weiterentwickelten Hubständer, der einen Wechselmechanismus mit Halterungen für Pipettenspitzen trägt, hängende, motorisch in der Höhe verstellbare vierte Mehrkanalpipette.

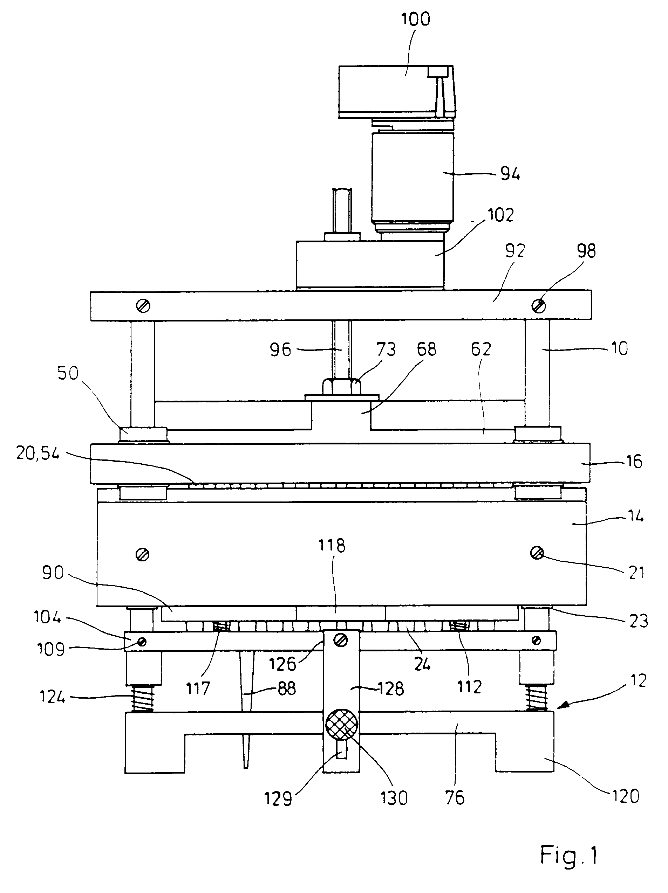

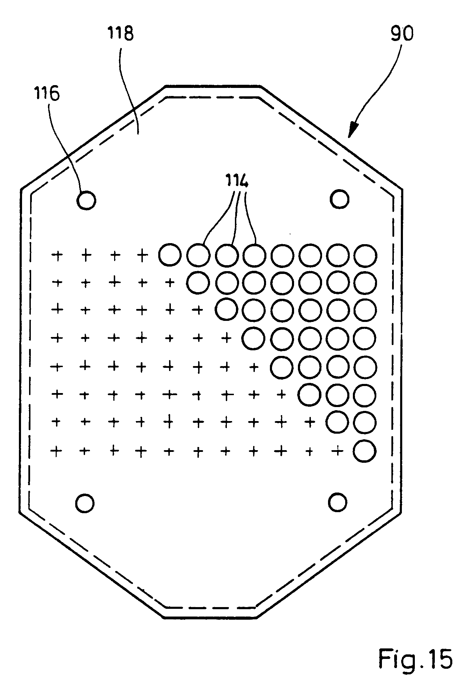

Die in Fig. 1 bis 18 dargestellte erste Mehrkanalpipette hat ein Gestell mit vier im Rechteck angeordneten, parallelen vertikalen Führungsstangen 10, an denen ein Aufsatzteil 12, ein Zylinderblock 14, eine Hubplatte 16 und eine Motorplattform 92 mit einem Elektromotor 94 angeordnet sind. Der Zylinderblock 14 weist eine große Zahl von Zylinderbohrungen 18, und die Hubplatte 16 eine entsprechende Zahl von Kolben 20 auf, die in die Zylinderbohrungen 18 eintauchen. Die Hubplatte 16 wird motorisch in Längsrichtung der Führungsstangen 10 auf und ab verfahren, wobei sich ihre Kolben 20 zum Ansaugen und Ausgeben von Flüssigkeit synchron in den Zylinderbohrungen 18 bewegen.

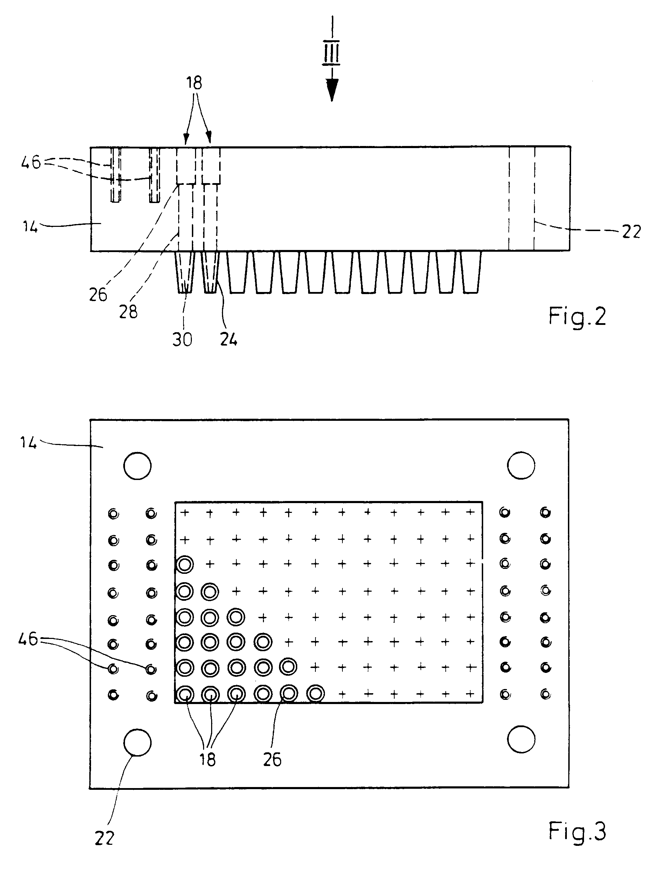

Gemäß Fig. 2 und Fig. 3 ist der Zylinderblock 14 quaderförmig, und er hat vier zum Aufstecken auf die Führungsstangen 10 dienende Führungsbohrungen 22 an den Ecken. Der Zylinderblock 14 wird mit Madenschrauben 21 an den Führungsstangen 10 arretiert und mit sprengringartigen Sicherungsringen 23 zusätzlich gesichert. Der Zylinderblock 14 besteht aus Metall oder Kunststoff, wobei je nach Anwendung ein säure- und/oder basefester Kunststoff, ein gegen organische Lösungsmittel resistenter Kunststoff, ein hitzebeständiger, insbesondere autoklavierbarer Kunststoff usw. in Betracht kommt. Der Zylinderblock 14 ist im Mittelbereich mit sechsundneunzig Zylinderbohrungen 18 versehen, die in einem rechteckigen Raster acht mal zwölf unter gleichem Abstand angeordnet sind. An der Unterseite des Zylinderblocks 14 sind auf gleicher Achse mit den Zylinderbohrungen 18 sechsundneunzig konische, sich nach unten verjüngende Pipettenspitzenhalter 24 angeordnet, auf die sich Standard-Pipettenspitzen aufstecken lassen.

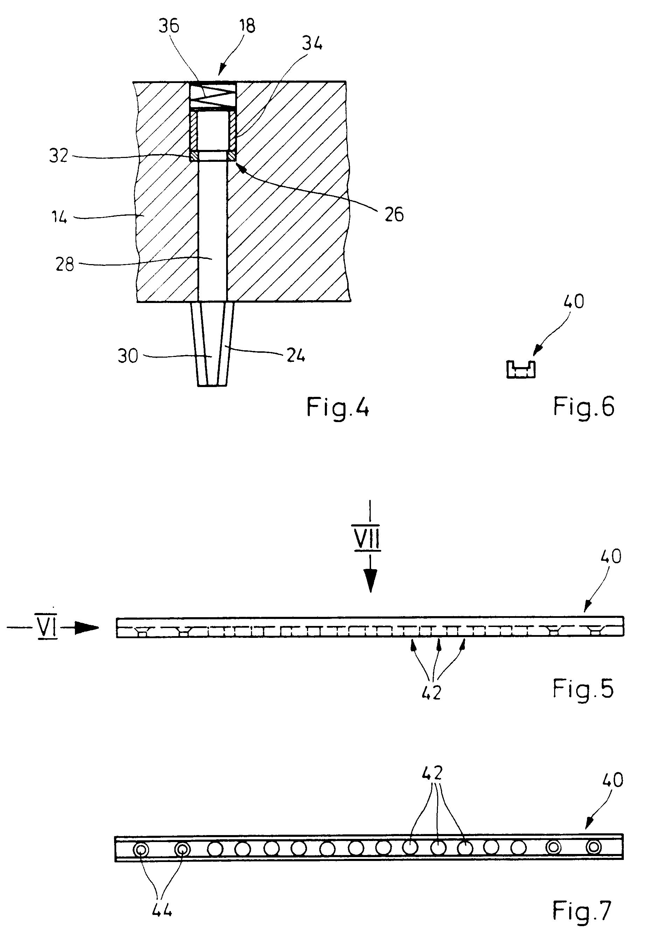

Gemäß Fig. 4 sind die Zylinderbohrungen 18 abgestuft. Sie haben einen von der Oberseite des Zylinderblocks 14 ausgehenden Abschnitt größeren Durchmessers, der über eine Stufe 26 in eine Zylinderlaufbuchse 28 kleineren Durchmessers für den Kolben 20 übergeht. Die Pipettenspitzenhalter 24 haben einen konischen Kanal 30, der gegenüber der Zylinderlaufbuchse 28 noch einmal im Durchmesser verjüngt ist.

Auf der Stufe 26 sitzt ein zur Abdichtung des Kolbens 20 dienender Dichtring 32. Dieser ist über eine Beilegscheibe 34 mit einer Druckfeder 36 beaufschlagt. Die Beilegscheibe 34 und die Druckfeder 36 sind in dem Abschnitt größeren Durchmessers der Zylinderbohrung 18 aufgenommen, so daß der Kolben 20 mit Spiel hindurchpaßt.

Als Widerlager für die Federn 36 jeweils einer Längsreihe von Führungsbohrungen 22 sind an der Oberseite des Zylinderblocks 14 Stege 40 angebracht, deren Aufbau im einzelnen Fig. 5 bis Fig. 7 entnommen werden kann. Die Stege 40 haben ein U-Profil, dessen U-Rücken an dem Zylinderblock 14 anliegt und entsprechend dem Raster der Zylinderbohrungen 18 mit zwölf Bohrungen 42 versehen ist. Diese sind im Durchmesser so dimensioniert, daß die Kolben 20, nicht aber die Druckfedern 36 hindurchpassen, so daß der Steg 40 diese niederhält. Der Steg 40 ragt zu beiden Seiten hin über die von ihm abgedeckte Reihe von Zylinderbohrungen 18 hinaus. Seine überstehenden Enden sind mit Montagebohrungen 44 versehen, durch die hindurch der Steg 40 mit Gewindebohrungen 46 des Zylinderblocks 14 verschraubt wird.

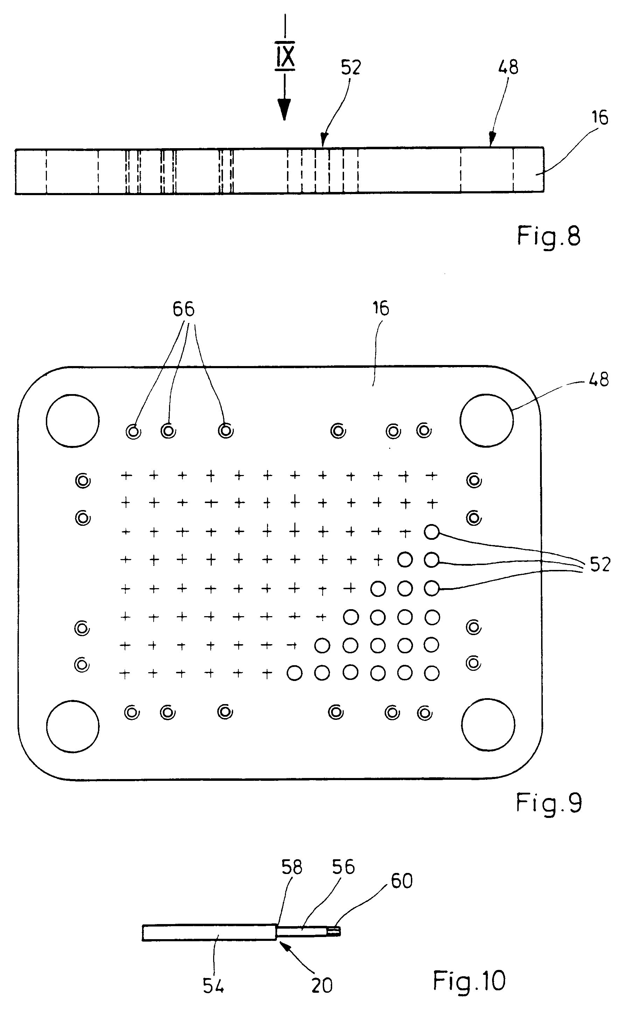

Die Hubplatte 16 besteht aus Kunststoff oder Leichtmetall, insbesondere Aluminium. Sie hat gemäß Fig. 8 und Fig. 9 einen abgerundet-rechteckigen Grundriß mit vier Bohrungen 48 an den Ecken, die je ein Linearkugellager 50 (vgl. Fig. 1) aufnehmen, das zur Führung der Hubplatte 16 an den Führungsstangen 10 dient. Statt Linearkugellagern können auch Gleitführungsbuchsen zum Einsatz kommen. In der Mitte der Hubplatte 16 sind in einem rechteckigen Raster acht mal zwölf, das dem der Zylinderbohrungen 18 entspricht, sechsundneunzig Montagebohrungen 52 für die Kolben 20 vorgesehen. Gemäß Fig. 10 haben die Kolben 20 einen zylindrischen Stößelkörper 54, der durch den Dichtring 32 geführt in die Zylinderlaufbuchse 28 der Zylinderbohrungen 18 paßt, und einen in axialer Verlängerung oben daran ansetzenden Schaft 56 kleineren Durchmessers, mit dem die Kolben 20 mit Preßpassung in den Montagebohrungen 52 der Hubplatte 16 einsitzen. Die Einstecktiefe der Kolben 20 ist durch die Stufe 58 zwischen dem Schaft 56 und dem Stößelkörper 54 begrenzt. Im eingesteckten Zustand ragt das obere Ende des Schafts 56 über die Hubplatte 16 hinaus. Es ist mit einem Außengewinde 60 versehen, auf das sich eine Mutter aufschrauben läßt, um den Kolben 20 an der Hubplatte 16 zu sichern.

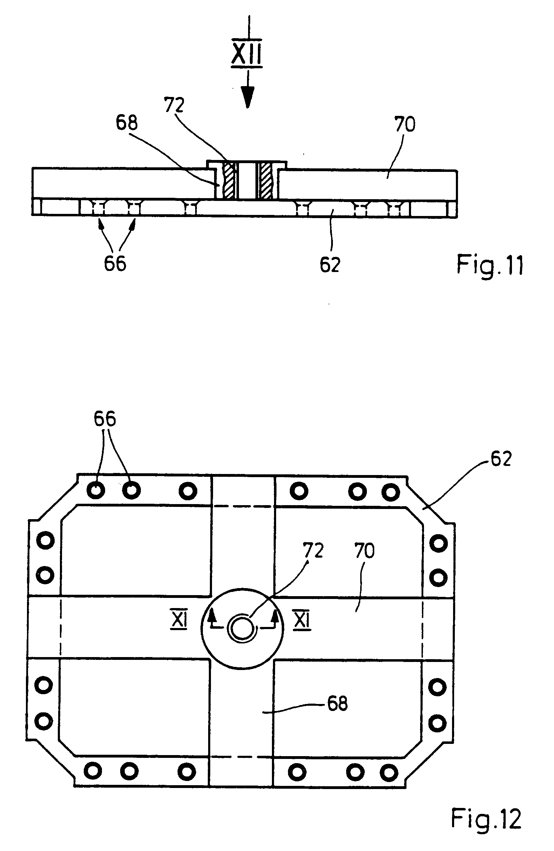

An der Oberseite der Hubplatte 16 ist ein Trägerrahmen 62 aus Metall, vorzugsweise Aluminium, befestigt, dessen Aufbau Fig. 11 und Fig. 12 entnommen werden kann. Der Trägerrahmen 62 ist im wesentlichen rechteckig und an den Ecken abgeschrägt. Er liegt bündig an der Hubplatte 16 an und ist an einem das Raster von Montagebohrungen 52 umgebenden Lochkranz 66 mit der Hubplatte 16 verschraubt ist. Von dem Trägerrahmen 62 gehen in der Mitte seiner Längs- und Querseiten U-förmige Bügel 68, 70 ab, deren U-Rücken über dem Zentrum der Hubplatte 16 ein Kreuz bilden und eine zentrische Gewindebohrung 72 aufweisen, deren Achse parallel zu den Führungsstangen 10 orientiert ist. In die Gewindebohrung 72 ist eine Gewindespindel 96 eingeschraubt, die Teil eines Gewindetriebs ist, mit dem die Hubplatte 16 in Längsrichtung der Führungsstangen 10 verfahren wird. Die Gewindespindel 96 ist mit einer Kontermutter 73 starr an der Hubplatte 16 angebracht. Zum Antrieb der Hubplatte 16 dient der in Fig. 1 gezeigte, außen auf der Motorplattform 92 sitzende Elektromotor 94. Die Motorplattform 92 hat einen rechteckigen Plattenkörper, der mit in seinen Ecken befindlichen Führungsbohrungen auf die Führungsstangen 10 aufgesteckt und mit Madenschrauben 98 daran arretiert ist. Im Zentrum der Motorplattform 92 befindet sich eine Durchtrittsöffnung für die starr mit der Hubplatte 16 verbundene Gewindespindel 96.

Der Elektromotor 94 ist ein getriebeuntersetzter Gleichstrommotor mit einem integrierten Winkelschrittgeber 100. Die Getriebeeinheit 102 ist ein Lineargetriebe, das einen mit der Gewindespindel 96 zusammenarbeitenden Schneckentrieb enthält.

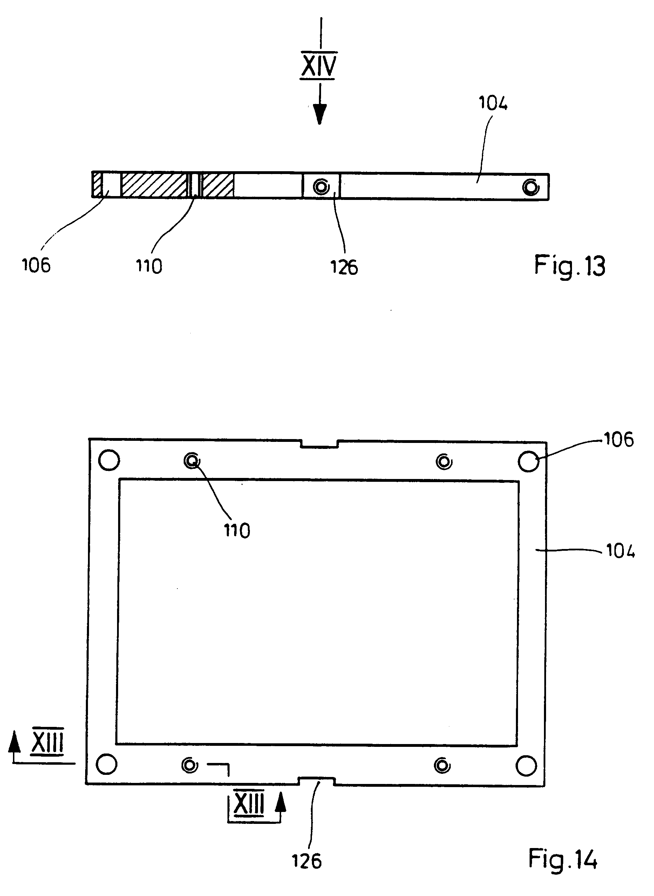

Unterhalb des Zylinderblocks 14 ist in einigem Abstand davon ein in Fig. 13 und Fig. 14 dargestellter rechteckiger Rahmen 104 an den Führungsstangen 10 angebracht, an dem ein Abwerfer 90 für Pipettenspitzen 88 gehaltert ist.

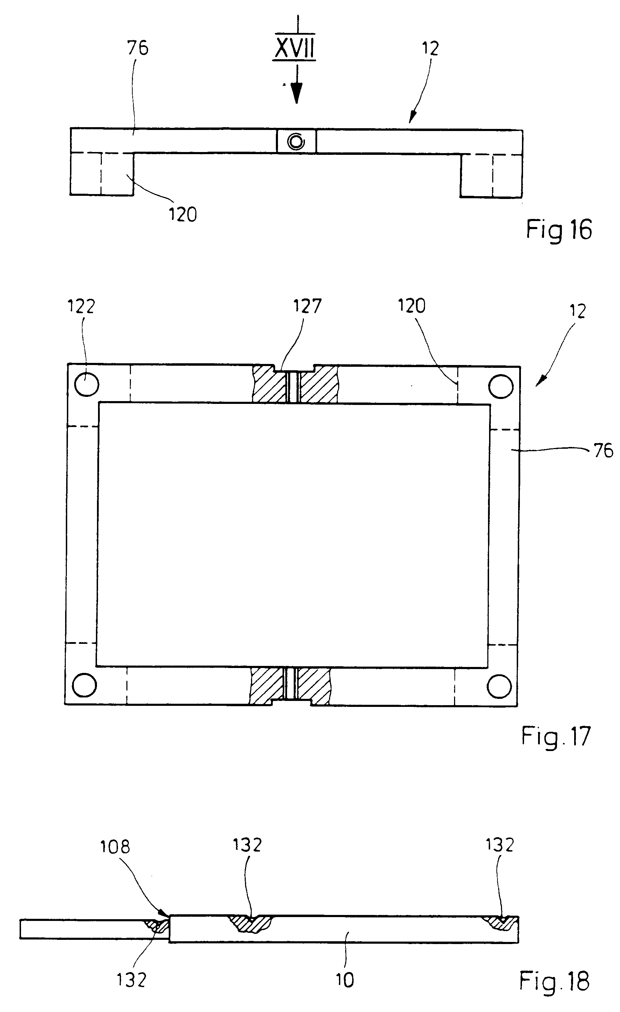

Wie man Fig. 18 entnimmt, sind die Führungsstangen 10 im Durchmesser abgestuft. Der Rahmen 104 ist mit Führungsbohrungen 106 auf die unteren Abschnitte kleineren Durchmessers der Führungsstangen 10 aufgesteckt. Er stützt sich an der Stufe 108 der Führungsstangen 10 ab und ist mit Madenschrauben 109 an den Führungsstangen 10 befestigt. Der Rahmen 104 ist mit vier symmetrisch angeordneten Gewindebohrungen 110 versehen, in die nach oben zu dem Zylinderblock 14 hin abstehende, parallele Führungsstifte 112 für den Abwerfer 90 eingeschraubt sind. Der Abwerfer 90 ist an den Führungsstiften 112 um einen kurzen Arbeitshub in der Höhe verstellbar.

Der Abwerfer 90 hat einen Plattenkörper mit sechsundneunzig Bohrungen 114, die in einem rechteckigen Raster acht mal zwölf angeordnet sind, das dem der Zylinderbohrungen 18 des Zylinderblocks 14 entspricht. Die Bohrungen 114 sind so dimensioniert, daß sie über die Pipettenspitzenhalter 24 des Zylinderblocks 14 passen. An letzteren sitzende Pipettenspitzen 88 können die Bohrungen 114 hingegen nicht passieren.

Der Plattenkörper des Abwerfers 90 ist mit Führungsbohrungen 116 auf die Stifte 112 aufgesteckt. Um die Stifte 112 herum liegen Federn 117, die sich an dem Rahmen 104 abstützen und den Abwerfer 90 in Anlage mit dem Zylinderblock 14 nach oben vorspannen. Er nimmt hier eine Ruhestellung ein, wenn Pipettenspitzen 88 auf den Zylinderblock 14 aufgesteckt werden. Der Plattenkörper hat zwei beidseits einander gegenüberliegende, trapezförmige Betätigungspartien 118, die seitlich über den Zylinderblock 14 vorstehen und ein Niederdrücken des Abwerfers 90 gegen die Kraft der Federn 117 ermöglichen.

Dabei werden die Pipettenspitzen 88 von den Pipettenspitzenhaltern 24 abgeworfen.

Unterhalb des Rahmens 104 ist an den Führungsstangen 10 ein in Fig. 16 und Fig. 17 dargestelltes Aufsatzteil 12 angebracht. Das Aufsatzteil 12 besteht aus einem rechteckigen Aufsatzrahmen 76, an dessen Ecken winkelförmige Klötze 120 angebracht sind, die über eine Standard-Mikrotiterplatte passen. Der Aufsatzrahmen 76 weist an den Ecken Führungsbohrungen 122 auf, mit denen er höhenverstellbar auf die Führungsstangen 10 aufgesteckt ist.

Das Aufsatzteil 12 ist durch Druckfedern 124, die um die Führungsstangen 10 herumliegen, von dem Rahmen 104 abgestellt und nach unten vorgespannt. Die Federn 124 sind so dimensioniert, daß sie das Gewicht des Plattenoberteils kompensieren. An zwei einander gegenüberliegenden Seiten des Rahmens 104 sind in Ausnehmungen 126 zwei nach unten abstehende Laschen 128 fest angebracht, die sich durch entsprechende Ausnehmungen 127 des Aufsatzrahmens 76 erstrecken und nach unten über diesen vorstehen. Die Laschen 128 sind auf der Höhe des Aufsatzrahmens 76 mit je einem in Längsrichtung verlaufenden Langloch 129 versehen, durch das der Schaft einer Feststellschraube 130 greift, die seitlich mit dem Aufsatzrahmen 76 verschraubt ist. Nach Lösen der Feststellschrauben 130 kann das Aufsatzteil 12 in der Höhe verstellt werden. Das ist mit minimalem Kraftaufwand möglich, während das Aufsatzteil 12 über eine Mikrotiterplatte gestülpt ist, da die Federn 124 das Gewicht des Pipettenoberteils kompensieren. Durch die Höhenverstellung des Aufsatzteils 12 wird der Abstand von an den Pipettenspitzenhaltern 24 klemmend festsitzenden Pipettenspitzen 88 von der Mikrotiterplatte eingestellt, über die das Aufsatzteil 12 gestülpt ist.

Gemäß Fig. 18 haben die Führungsstangen 10 Kerben 132, die zur einwandfreien Positionierung und Arretierung der starr daran anzubringenden Teile - Rahmen 104, Zylinderblock 14 und Motorplattform 92 - dienen. Rahmen 104 und Zylinderblock 14 können einfach von den Führungsstangen 10 abgebaut werden, was für eine problemlose Wartung insbesondere der Kolben und der Dichtringe 32 von Bedeutung ist.

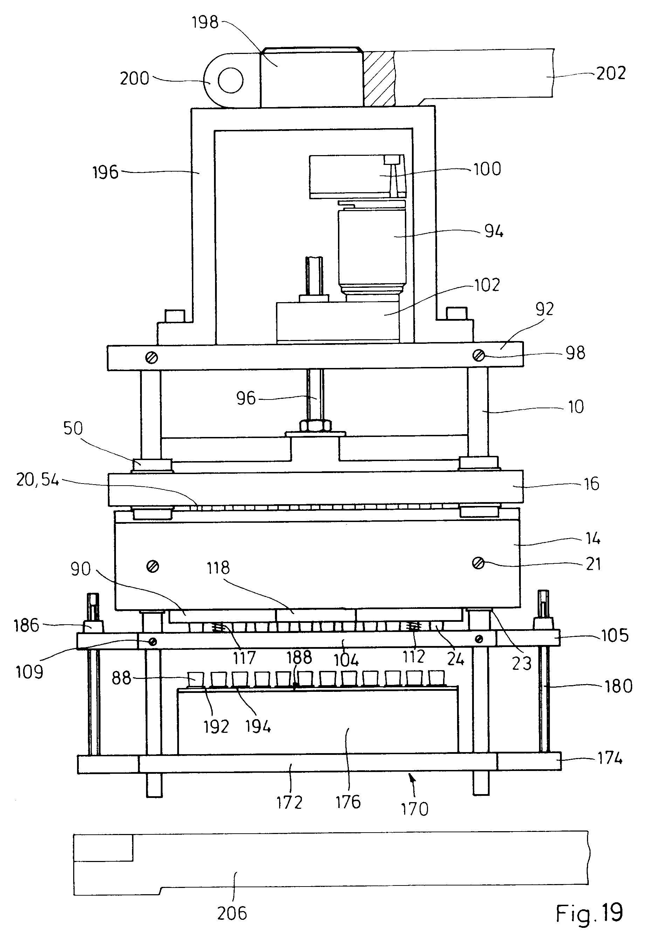

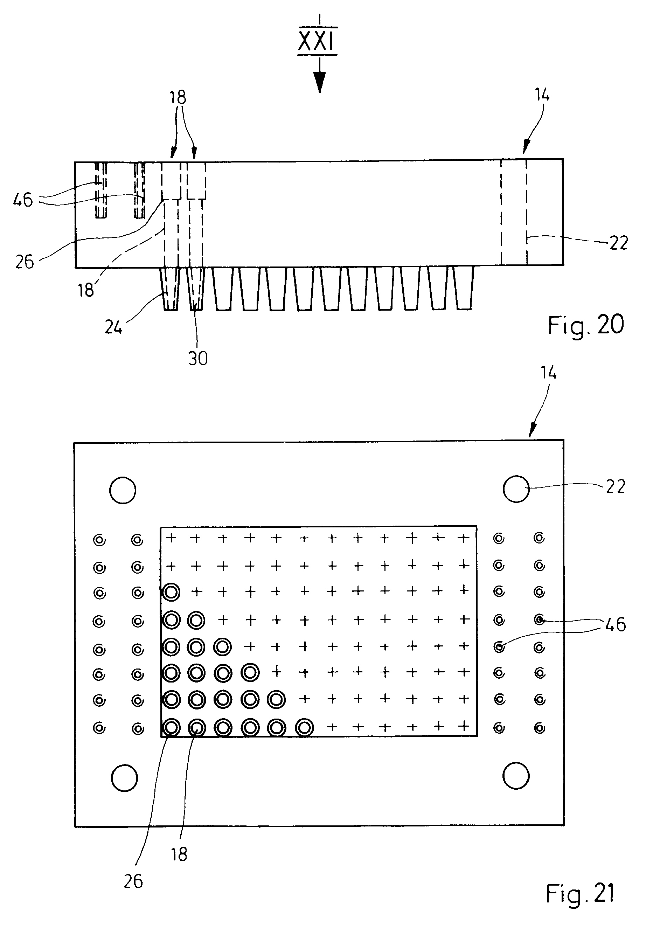

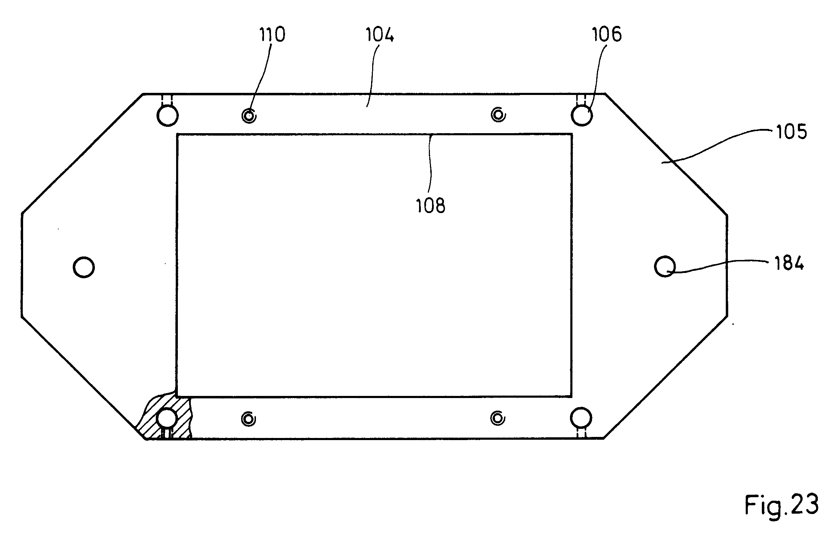

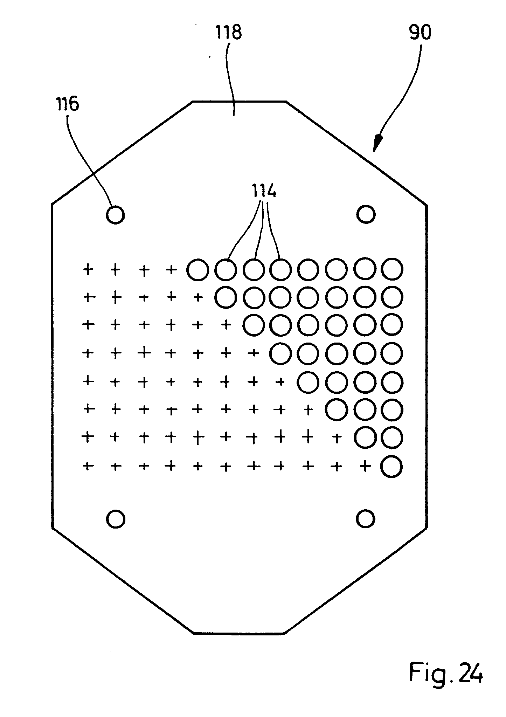

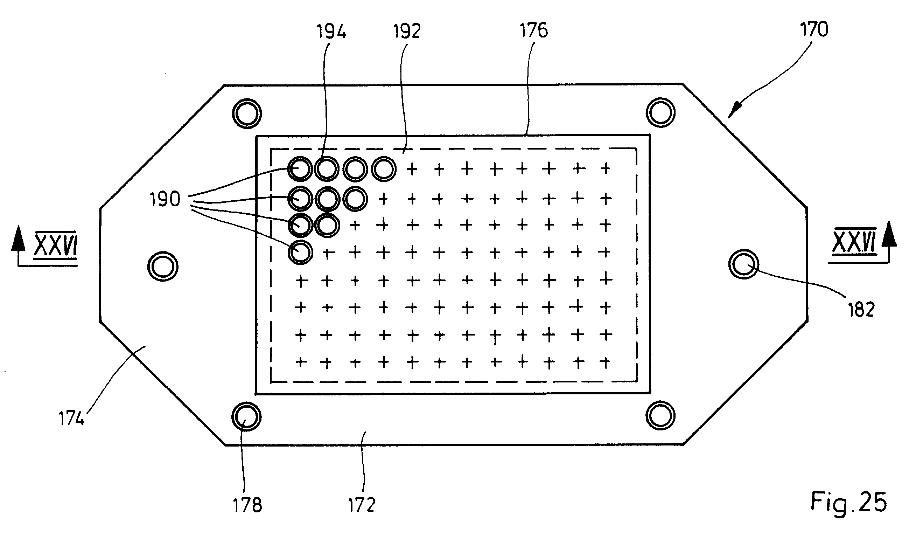

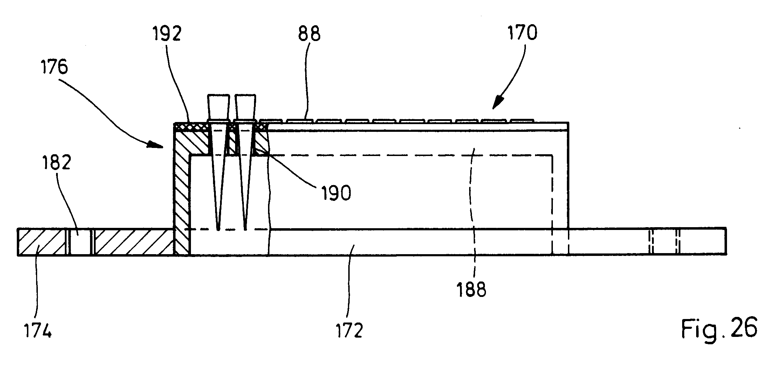

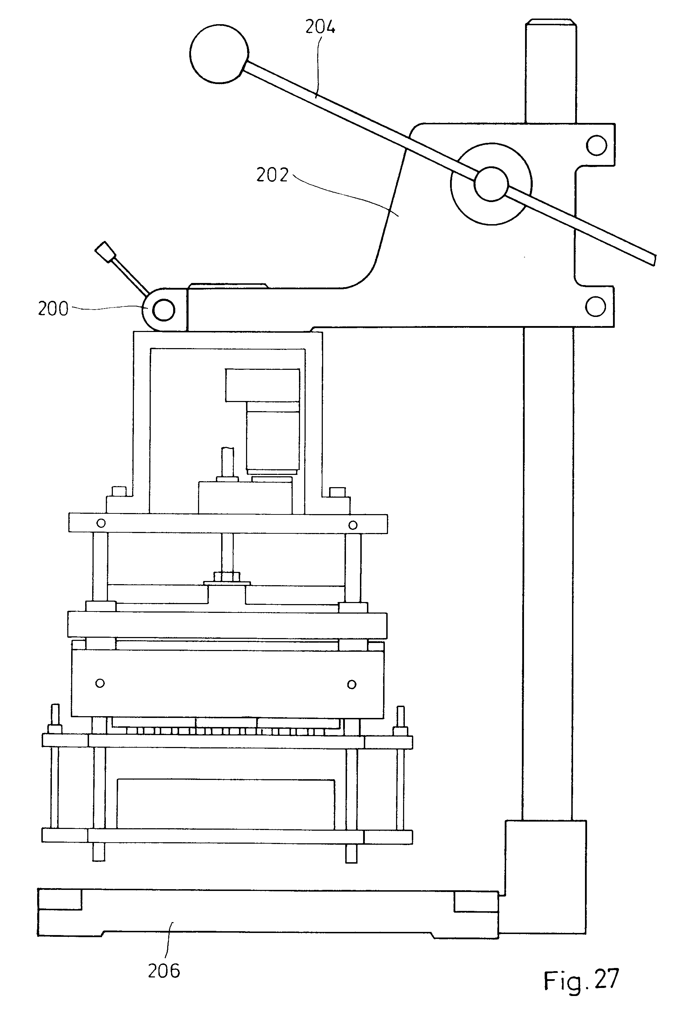

Die in Fig. 19 bis Fig. 27 dargestellte zweite Mehrkanalpipette hat ein Gestell mit vier im Rechteck angeordneten, parallelen vertikalen Führungsstangen 10, an denen eine Halterung 170 für aufzusteckende Pipettenspitzen, ein Rahmen 104, ein Zylinderblock 14, eine Hubplatte 16 und eine Motorplattform 92 mit einem Elektromotor 94 angeordnet sind. Funktionsgleiche Teile sind mit den gleichen Bezugszeichen wie bei der zuvor beschriebenen Pipette versehen und werden im folgenden nicht näher erläutert.

Unterhalb des Rahmens 104 befindet sich eine Halterung 170, mit der sechsundneunzig Pipettenspitzen 88 zugleich auf die Pipettenspitzenhalter 24 des Zylinderblocks 14 aufgesteckt werden können. Die Halterung 170 besteht aus einer im wesentlichen rechteckigen, mit trapezförmigen seitlichen Ansätzen 174 versehenen Platte 172 und einem mittig darauf aufbauenden, quaderförmigen Hohlblock 176. Die Platte 172 ist mit Führungsbohrungen 178 auf die Führungsstangen 10 aufgezogen, an denen sie sich axial verstellen läßt. Hierzu dienen zwei zu den Führungsstangen 10 parallele Gewindestangen 180, die nach oben abstehend in Gewindebohrungen 182 der Ansätze 174 eingeschraubt sind. Die Gewindestangen 180 greifen durch mit den Gewindebohrungen 182 ausgerichtete Bohrungen 184 in den seitlichen Ansätzen 105 des Rahmens 104 hindurch. Auf die überstehenden Enden der Gewindestangen 180 sind Flügelmuttern 186 aufgeschraubt, die sich an dem Rahmen 104 abstützen. Die Flügelmuttern 186 schrauben sich auf den Gewindestangen 180 vor, wodurch die Halterung 170 axial an den Führungsstangen 10 verstellt wird.

Der Hohlblock 176 ist so dimensioniert, daß er durch die Rechtecköffnung 108 des Rahmens 104 paßt. Er hat an der Oberseite eine ebene Deckplatte 188, die mit sechsundneunzig Bohrungen 190 zur Aufnahme von Pipettenspitzen 88 versehen ist. Die Bohrungen 190 sind in einem rechteckigen Raster acht mal zwölf angeordnet, das dem der Zylinderbohrungen 18 des Zylinderblocks 14 entspricht.

Auf die Deckplatte 188 ist außen eine dünne Schicht eines elastischen Materials aufgebracht, z. B. in Form eines aufgeklebten Flachgummis 192. Dieses ist in demselben Raster wie die Deckplatte 188 gelocht. An der Außenseite des Flachgummis 192 sind dessen Löcher 190 umgebende Metallringe 194 aufgeklebt. Zur Beschickung der Halterung 170 werden Pipettenspitzen 88 einzeln oder packungsweise von oben in die Öffnungen 190 des Hohlblocks 176 eingesetzt. Die Köpfe der Pipettenspitzen stützen sich dabei an den Ringen 194 ab, während ihre Enden im Inneren des Hohlblocks 176 zu liegen kommen. Zur Bestückung der Pipettenspitzenhalter 24 des Zylinderblocks 14 wird die Halterung 170 durch Drehen der Flügelmutter 186 an den Führungsstangen 10 hochgeschraubt und gegen den Zylinderblock 14 gespannt, so daß die Köpfe der Pipettenspitzen auf die konischen Pipettenspitzenhalter 24 gepreßt werden. Die Hubbewegung der Halterung 170 ist in nicht näher dargestellter Weise anschlagbegrenzt, damit Beschädigungen des Zylinderblocks 14 vermieden werden. Wie nachstehend näher erläutert, ist auch ein Niederfahren der Pipette zur Aufnahme von Pipettenspitzen 88 aus der Halterung 170 möglich und handhabungstechnisch bevorzugt.

Das Flachgummi 192 ermöglicht beim Aufpressen der Pipettenspitzen 88 eine abgefederte Ausrichtbewegung der Ringe 194 sowohl in axialer Richtung als auch zur Seite. Dadurch werden Fertigungstoleranzen ausgeglichen. Der Anpreßdruck verteilt sich gleichmäßig auf die Pipettenspitzen 88, beschädigungsfrei an den Pipettenspitzenhaltern 24 festsitzen. Ähnliches kann auch ohne Flachgummi durch Spiel der Pipettenspitzen 88 in den Bohrungen 190 der Halterung 170 erreicht werden.

Die zum Bestücken der Pipettenspitzenhalter 24 erforderliche Relativverstellung von Zylinderblock 14 und Halterung 170 kann auch in anderer Weise bewirkt, und der erforderliche Anpreßdruck in anderer Weise bereitgestellt werden, als durch den beschriebenen Gewindetrieb. Es kommen beliebige andere Spannmechanismen in Betracht. Nicht zuletzt kann die Mehrkanalpipette zu diesem Zweck auch mit dem Hubständer niederbewegt werden, an dem sie in nachstehend noch näher beschriebener Weise hängt.

Die in der zweiten Mehrkanalpipette verwendeten Kolben 20 haben wie in Fig. 10 dargestellt einen zylindrischen Kolbenkörper 54, der in die Zylinderbohrungen 18 des Zylinderblocks 14 paßt, und einen in axialer Verlängerung oben daran ansetzenden Schaft 56 kleineren Druchmessers, der zur Anbringung der Kolben 20 an der Hubplatte 16 dient. Das Ende des Schafts 56 ist mit einem Außengewinde 60 versehen, auf das sich eine Mutter 156 aufschrauben läßt. Alternativ kann an dem Schaft 56 ein Sprengring angebracht werden (nicht dargestellt).

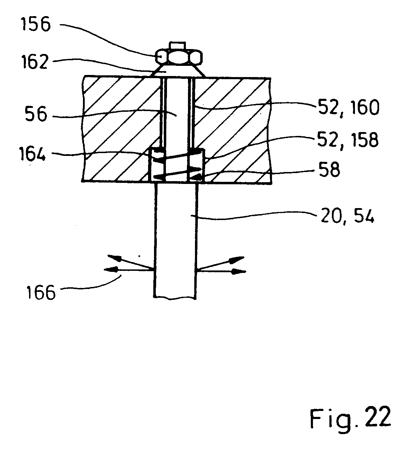

Wie man in Fig. 22 erkennt, sind die Montagebohrungen 52 in der Hubplatte 16 abgestuft. Ein von der Unterseite der Hubplatte 16 ausgehender Abschnitt 158 größeren Durchmessers der Montagebohrungen 52 ist so dimensioniert, daß der Kolbenkörper 54 mit Spiel darin Platz hat, während der Abschnitt 160 kleineren Durchmessers der Montagebohrung 52 den Schaft 56 mit Spiel aufnimmt. Im montierten Zustand steht der Schaft 56 mit seinem dem Kolbenkörper 54 abgewandten Ende oben aus der Hubplatte 16 heraus. Um das Schaftende herum liegt mit Spiel ein Konusring 162, dessen Basis in verschieblicher Anlage mit der Oberseite der Hubplatte 16 steht, und der sich von der Hubplatte 16 weg verjüngt. Die auf das Ende des Schafts 56 aufgeschraubte Mutter 156 bzw. der dort sitzende Sprengring stützt sich an der Stirnseite kleineren Durchmessers des Konusrings 162 ab, die einen schmalen Ring bildet, über den die Mutter 156 radial nach außen übersteht.

Die Kolben sind durch eine Druckfeder 164 in die Anlagestellung vorgespannt, die um den Schaft 56 herumliegend in dem Abschnitt 158 größeren Druchmessers der Montagebohrung 52 aufgenommen ist und sich mit einem Ende an der Durchmesserstufe der Montagebohrung 52 und mit dem anderen Ende an der Stufe 58 zwischen dem Schaft 56 und dem Kolbenkörper 54 abstützt. Letztere Stufe 58 kommt im montierten Zustand etwa auf Höhe der Hubplattenunterseite zu liegen.

Die Kolben 20 haben in den Montagebohrungen 52 ein seitliches Verschiebespiel, das durch das Untermaß des Kolbenkörpers 54 und Schafts 56 zu dem Durchmesser der Abschnitte 158, 160 der Montagebohrung 52 gewährleistet ist. Desweiteren ist ein allseitiges Neigen der Kolben 20 möglich, wie durch die Pfeile 166 angedeutet ist. Die Kolben 20 kippen dabei mit der Mutter 156 um die Ringkante am oberen Ende kleineren Durchmessers des Konusrings 162, dessen Verjüngung der Mutter 156 das erforderliche Spiel läßt. Die Druckfeder 164 hat gegenüber der Verschiebe- und Kippbewegung der Kolben 20 eine hemmende und rückstellende Funktion.

Die erfindungsgemäße Anbringung der Kolben 20 an der Hubplatte 16 gewährleistet einen Ausgleich von Maßtoleranzen und einen reibungsarmen Lauf der Kolben 20 in den Zylinderbohrungen 18 des Zylinderblocks 14. Die Kolben 20 können insbesondere einem nicht exakt axialen Verlauf der Zylinderbohrungen 18 folgen, ohne zu verkanten. Im Saughub der Mehrkanalpipette, der der Meßhub der zu pipettierenden Flüssigkeit ist, werden die Kolben aufgrund der bündigen Anlage von Konusring 162 und Mutter 156 zwangsweise von der Hubplatte 16 mitgenommen, ohne daß der Kolbengleichlauf durch die abgefederte Anbringung der Kolben 20 beeinträchtigt würde. Im Entleerhub der Mehrkanalpipette ist hingegen ein Einfedern der Druckfedern 164 möglich, was zwar nicht im Normalbetrieb, wohl aber beim Anfahren nach längerem Stillstand zu tolerieren, wenn nicht sogar erwünscht ist.

An der Motorplattform 92 der zweiten Mehrkanalpipette ist ein den Elektromotor 94 übergreifender Bügel 196 angebracht, der einen nach oben abstehenden Spannzapfen 198 trägt. Der Spannzapfen 198 paßt in das Spannfutter 200 eines Hubständers 202, der als Bohr- und Fräsständer bekannt ist. Mit dem Betätigungshebel 204 des Hubständers 202 erfolgt eine bequeme Höhenverstellung der Mehrkanalpipette, z. B. zur Verstellung der Pipettierhöhe. Auch kann eine Verstellbewegung zur Aufnahme von Pipettenspitzen 88 aus einer Halterung 170 durchgeführt werden, die sich auf dem Tisch 206 des Hubständers 202 befindet (nicht dargestellt). An dem Tisch 206 kann auch ein Wechselmechanismus für Probenträger angebracht sein (nicht dargestellt).

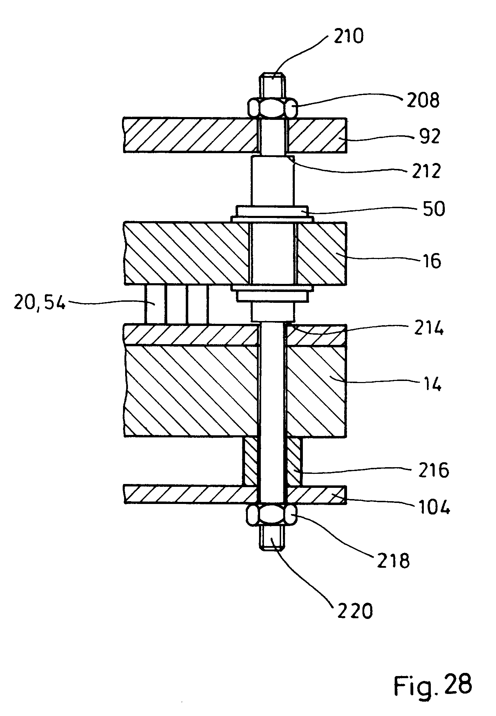

Bei der in Fig. 28 dargestellten dritten Mehrkanalpipette sind die Führungsstangen 10 im Durchmesser anders abgestuft. Der Rahmen 104, der Zylinderblock 14, die Motorplattform 92 und Abstandshalter 216 sind mit Führungsbohrungen auf die Abschnitte kleineren Durchmessers der Führungsstangen 10 aufgesteckt. Die Teile stützen sich einends an den Schultern 212, 214 der Führungsstangen 10 ab und sind andernends mit auf die Führungsstangen 10 aufgeschraubten Muttern 208, 218 fixiert. An dem mittleren Abschnitt größeren Durchmessers der Führungsstangen 10 ist die Hubplatte 16 mit Linearkugellagern 50 verfahrbar montiert.

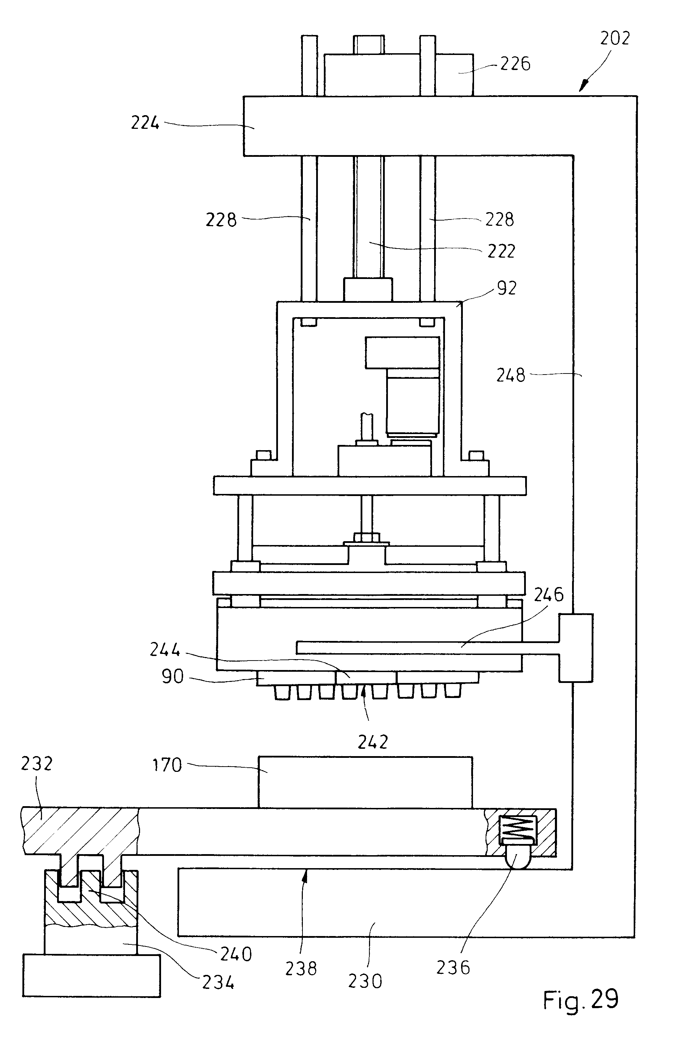

Fig. 29 zeigt eine vierte Mehrkanalpipette, die motorisch in der Höhe verstellbar an einem Hubständer 202 hängt. Zur Höhenverstellung ist in eine von der Motorplattform 92 nach oben abgehende Gewindespindel 222 vorgesehen, auf die ein an der oberen Traverse 224 des Hubständers 202 angeordneter Stellmotor 226 arbeitet. Zu demselben Zweck kann ein motorbetätigter Kniehebelmechanismus dienen. Die Pipette ist an Parallelführungsstangen 228, die sich von der Motorplattform 92 nach oben erstrecken und die Traverse 224 durchsetzen, verdrehsicher abgefangen.

An der Basis 230 des Hubständers 202 befindet sich unterhalb der Pipette ein Wechselmechanismus in Form eines Drehtellers 232, der auf einer in nicht näher dargestellter Weise motorisch angetriebenen vertikalen Welle 234 sitzt. Der Drehteller 232 trägt eine oder mehrere Halterungen 170 für Pipettenspitzen 88 der zuvor beschriebenen Art sowie Mikrotiterplatten, Reagenzienbehälter o. ä. Die Pipettenspitzen 88 werden durch Niederfahren der Pipette aus einer darunter befindlichen Halterung 170 entnommen. Die Pipettenspitzen 88 kommen dabei in haftende Steckverbindungen mit den konischen Pipettenspitzenhaltern 24, so daß sie von der wieder hochfahrenden Pipette mitgenommen werden.

Beim Aufstecken der Pipettenspitzen 88 wirken beträchtliche Kräfte auf die Halterung 170 und den außermittig beaufschlagten Drehteller 232. Es muß eine einwandfreie horizontale Orientierung des Drehtellers 232 sichergestellt sein, damit die Pipettenspitzen 88 allesamt störungsfrei aufgenommen werden. Das kann durch eine Lagerung des Drehtellers 232 auf einer planen selbstschmierenden Gleitschicht geschehen. Die Anforderungen an die Fertigungstoleranzen sind dabei hoch.

Die in Fig. 29 dargestellte Ausführungsform sieht stattdessen vor, den Drehteller 232 auf einer Anzahl Federbeine 236 zu lagern, die ihm normalerweise mit Laufspiel von einer planen Anlagefläche 238 des Ständers 202 abstellen. Bei Beaufschlagung mit der Pipette federt der Drehteller 232 ein, so daß er bündig an der Fläche 238 anliegt, die die wirkenden Kräfte aufnimmt und die einwandfrei horizontale Orientierung des Drehtellers 232 sicherstellt. Die Welle 234 ist mit einer Mitnehmeranordnung 240, die entsprechendes Axialspiel hat, an den Drehteller 232 gekoppelt.

Der Abwerfer 90 der Pipette hat eine Rampe 242, die bei Niederdrücken des Abwerfers 90 in gestaffelter Folge auf an den Pipettenspitzenhaltern 24 sitzende Pipettenspitzen 88 trifft und diese reihenweise von den Pipettenspitzenhaltern 24 abschert. Die Betätigung des Abwerfers 90 ist von der Höhenverstellung der Pipette abgeleitet. Hierzu ist der Abwerfer 90 mit einem Stellglied z. B. in Form einer Lasche 244, einer oder mehrerer durch den Zylinderblock 14, und gegebenenfalls die Hubplatte 16 und die Motorplattform 92 hindurchgeführter Betätigungsstangen o. a. versehen. Die Betätigungsstangen können mit dem Abwerfer 90 fest verbunden und mit Federn versehen sein, die den Abwerfer 90 in die Ruhestellung vorspannen (nicht dargestellt). Der Aufsatzrahmen 76 kann dadurch entfallen. Das Stellglied trifft bei Höhenverstellung der Pipette an geeigneter Stelle auf einen Anschlag 246, der den Abwerfer 90 festhält, während sich die Pipette weiterbewegt und die Pipettenspitzen 88 abgeworfen werden. Bei dem Anschlag 246 kann es sich um einen Festanschlag, einen höhenverstellbar an der Säule 248 des Ständers 202 angeordneten Anschlag, einen geschaltet in die Bahn des Stellglieds ein- und ausfahrenden Anschlag handeln.

Die beschriebenen Mehrkanalpipetten haben vielfältige Anwendungen in der klinischen Chemie, für Blutgerinnungsuntersuchungen, Blutgruppenbestimmungen sowie Zellwaschungen auf Mikrotiterplatten u. ä. Sie eignen sich besonders gut für den Einsatz in Kombination mit einem Pipettierroboter.

## Patentansprüche

1. Mehrkanalpipette mit einer sehr großen Zahl, insbesondere sechsundneunzig parallelen Pumpenzylindern und darin passenden Kolben (20), die in einem Raster, das dem der Pumpenzylinder entspricht, insbesondere acht mal zwölf, zu einer Einheit gekoppelt sind, die in Zylinderachslängsrichtung relativ zu den Pumpenzylindern verstellbar ist, mit konischen Pipettenspitzenhaltern (24) an den unteren Enden der Pumpenzylinder, auf die Pipettenspitzen (88) aufsteckbar sind, und mit einem Abwerfer (90) für die aufgesteckten Pipettenspitzen (88), dadurch gekennzeichnet, daß die Pumpenzylinder als Öffnungen (18) in einem Zylinderblock (14) ausgebildet sind, daß die Kolbeneinheit an zugleich eine Stützfunktion erfüllenden parallelen Führungsstangen (10) verstellbar ist, daß die ganze Mehrkanalpipette höhenverstellbar an einem Ständer (202) angebracht ist, daß die Pipettenspitzen (88) aus einer an der Basis des Ständers (202) befindlichen Halterung (170) durch relative Höhenverstellung zwischen Zylinderblock (14) und Halterung (170), vorzugsweise Niederfahren der ganzen Mehrkanalpipette, auf die Pipettenspitzenhalter (24) aufsteckbar sind, und daß der Abwerfer (90) ein Stellglied (244) aufweist, das bei Höhenverstellung der Mahrkanalpipette auf einen Anschlag trifft, so daß der Abwerfer (90) festgehalten wird, während die Pipettenspitzen (88) abgeworfen werden.

2. Pipette nach Anspruch 1, dadurch gekennzeichent, daß sie ein Gestell mit vier im Rechteck angeordneten, parallelen vertikalen Führungsstangen (10) hat, an denen der Zylinderblock (14) und eine Motorplattform (92) mit einem Motor für den Antrieb der Kolbeneinheit starr und die Kolbeneinheit verstellbar angeordnet sind.

3. Pipette nach Anspruch 1 oder 2, dadurch gekennzeichnet, daß die Öffnungen (18) in dem Zylinderblock (14) abgestuft sind, und daß auf einer Stufe (26) ein Dichtring (32) sitzt, der den Kolben (20) abdichtet.

4. Pipette nach Anspruch 3, dadurch gekennzeichnet, daß der Dichtring (32) durch eine in dem Abschnitt größeren Durchmessers der Öffnung (18) aufgenommene Feder (36) niedergespannt und gepreßt ist.

5. Pipette nach Anspruch 4, dadurch gekennzeichnet, daß sich die Federn (36) aller oder jeweils einer Reihe von Öffnungen (18) an einem außen an dem Zylinderblock (14) angebrachten, die Öffnungen wenigstens zum Teil überdeckenden Widerlager z. B. in Form einer Platte, eines Stegs (40) o. ä. abstützen.

6. Pipette nach einem der Ansprüche 1 bis 5, dadurch gekennzeichnet, daß an der Unterseite des Zylinderblocks (14) auf gleicher Achse mit den Öffnungen (18) konische Pipettenspitzenhalter (24) ansetzen, die einen gegenüber dem Durchmesser der Öffnungen (18) vorzugsweise verjüngten, insbesondere zylindrischen oder konischen Kanal (30) haben.

7. Pipette nach einem der Ansprüche 1 bis 6, dadurch gekennzeichnet, daß die Kolben (20) an einer Hubplatte (16) angebracht sind, die mittels eines Gewindetriebs motorgetrieben in Längsrichtung der Führungsstangen (10) verfahrbar ist.

8. Pipette nach Anspruch 7, dadurch gekennzeichnet, daß die Kolben (20) starr an der Hubplatte (16) angebracht sind, wozu sie im Durchmesser abgestuft und mit einem Schaft (56) geringeren Durchmessers passend in Montagebohrungen (52) der Hubplatte (16) aufgenommen sein können.

9. Pipette nach Anspruch 8, dadurch gekennzeichnet, daß ein aus der Hubplatte (16) herausstehendes Ende des Schafts (56) mit einem Gewinde (60) versehen ist.

10. Pipette nach Anspruch 7, dadurch gekennzeichnet, daß die Kolben (20) mit seitlichem Verschiebespiel und allseitigem Neigungsspiel an der Hubplatte (16) angebracht sind.

11. Pipette nach Anspruch 10, dadurch gekennzeichnet, daß die Kolben (20) mit Drehspiel um ihre Achse an der Hubplatte (16) angebracht sind.

12. Pipette nach Anspruch 10 oder 11, dadurch gekennzeichnet, daß die Kolben (20) durch ein Federelement beaufschlagt sind, das die Kolben (20) in normalerweiser axial fester Anordnung an der Hubplatte (16) hält, bei außergewöhnlich hohem Laufwiderstand der Kolben (20) z. B. nach längerem Stillstand der Pipette aber unter Einfederung eine axiale Relativbewegung von Kolben (20) und Hubplatte (16) ermöglicht.

13. Pipette nach einem der Ansprüche 10 bis 12, dadurch gekennzeichnet, daß die Kolben (20) einen Schaft (56) haben, der mit Spiel durch eine Montageöffnung (52) in der Hubplatte (16) hindurchgreift und mit seinem dem Kolbenkörper abgewandten Ende über die Hubplatte (16) übersteht, und daß die Hubplatte Abstützteile trägt, die mit geringer Breite und vorzugsweise radialem Spiel um je einen der überstehenden Schaftabschnitte herumliegen, wobei letztere mit einem Auflager verbunden sind, das radial überstehend an dem Abstützteil zu liegen kommt.

14. Pipette nach Anspruch 13, dadurch gekennzeichnet, daß die Abstützteile allseitiges Verschiebespiel an der Hubplatte (16) haben.

15. Pipette nach Anspruch 13 oder 14, dadurch gekennzeichnet, daß sich das Abstützteil von der Hubplatte (16) zu dem Auflager hin verjüngt.

16. Pipette nach einem der Ansprüche 13 bis 15, dadurch gekennzeichnet, daß das Abstützteil ein Konusring (162) ist.

17. Pipette nach einem der Ansprüche 13 bis 16, dadurch gekennzeichnet, daß das Auflager lösbar an dem Schaft (56) angebracht und insbesondere von einer auf den Schaft (56) aufgeschraubten Mutter (156) oder einem an dem Schaft (56) festsitzenden Sprengring gebildet ist.

18. Pipette nach einem der Ansprüche 13 bis 17, dadurch gekennzeichnet, daß die Kolben (20) durch eine Druckfeder (164) in Anlage an dem Abstützteil vorgespannt sind.

19. Pipette nach Anspruch 18, dadurch gekennzeichnet, daß die Kolben (20) im Durchmesser abgestuft sind, und daß die Druckfeder (164) um den einen kleineren Durchmesser als der Kolbenkörper (54) aufweisenden Schaft (56) herumliegt und sich einends an der Stufe (58) zwischen Kolbenkörper (54) und Schaft (56) und andernends an der Hubplatte (16) abstützt.

20. Pipette nach Anspruch 18 oder 19, dadurch gekennzeichnet, daß die Druckfeder (164) in einer Montagebohrung (52) der Hubplatte (16) aufgenommen ist.

21. Pipette nach einem der Ansprüche 7 bis 20, dadurch gekennzeichnet, daß die Hubplatte (16) mit Linearkugellagern (50) oder Gleitführungsbuchsen an den Führungsstangen (10) geführt ist.

22. Pipette nach einem der Ansprüche 7 bis 21, dadurch gekennzeichnet, daß der Gewindetrieb eine Gewindespindel (96) oder Kugelgewindespindel enthält.

23. Pipette nach einem der Ansprüche 7 bis 22, dadurch gekennzeichnet, daß die Stellbewegung der Hubplatte (16) in einer den Totgang des Gewindetriebs berücksichtigenden Weise gesteuert ist, und zwar vorzugsweise anhand des Laufwiderstands der Hubplatte und/oder optoelektronisch beispielsweise mittels einer Lichtschranke, die die Nullstellung der Volumenmessung im Saughub markiert, nachdem der Gewindetotgang des Spindeltriebs zurückgelegt ist.

24. Pipette nach einem der Ansprüche 1 bis 23, dadurch gekennzeichnet, daß der Zylinderblock (14) auf die Führungsstangen (10) aufgesteckt und lösbar fest daran angebracht ist.

25. Pipette nach einem der Ansprüche 1 bis 24, dadurch gekennzeichnet, daß oberhalb der Hubplatte (16) eine den Aufbau der Pipette vorzugsweise stabilisierende Motorplattform (92) mit einem zum Antrieb der Hubplatte (16) dienenden Motor (94) an den Führungsstangen (10) angebracht ist.

26. Pipette nach Anspruch 25, dadurch gekennzeichnet, daß der Motor (94) ein getriebeuntersetzter Gleichstrommotor mit einem integrierten Winkelschrittgeber (100) hoher Auflösung oder ein Schrittmotor ist, wobei vorzugsweise die Getriebeeinheit (102) der Hubplatte (16) bei bestehender Getriebeverbindung ein geringes seitliches Bewegungsspiel läßt.

27. Pipette nach einem der Ansprüche 1 bis 26, dadurch gekennzeichnet, daß unterhalb des Zylinderblocks (14) ein Aufsatzteil (12) höhenverstellbar und arretierbar auf die Führungsstangen (10) aufgezogen ist, das über eine Mikrotiterplatte paßt.

28. Pipette nach Anspruch 27, dadurch gekennzeichnet, daß das Aufsatzteil (12) mit Federn (124) nach unter vorgespannt ist, die das Gewicht des Pipettenoberteils kompensieren.

29. Pipette nach einem der Ansprüche 25 bis 28, dadurch gekennzeichnet, daß die Führungsstangen (10) abgestuft sind, und daß die Motorplattform (92) und/oder der Zylinderblock (14) und/oder ein den Abwerfer (90) halternder Rahmen (104), gegebenenfalls unter Zwischenschaltung eines oder mehrerer Abstandshalter (216), an einer Schulter (212, 214) der Führungsstangen (10) abgestützt und vorzugsweise mittels auf beide Endabschnitte der Führungsstangen (10) aufschraubbarer Muttern (208, 218) fixierbar sind.

30. Pipette nach einem der Ansprüche 1 bis 29, dadurch gekennzeichnet, daß sie manuell oder motorisch höhenverstellbar an dem Ständer (202) angebracht ist.

31. Pipette nach einem der Ansprüche 1 bis 30, dadurch gekennzeichnet, daß zur Höhenverstellung ein Kniehebelmechanismus vorgesehen ist, der am Tiefpunkt der Pipette in Strecklage kommt.

32. Pipette nach einem der Ansprüche 1 bis 31, dadurch gekennzeichnet, daß als Stellglied des Abwerfers (90) eine Lasche (244) oder eine oder mehrere durch den Zylinderblock (14) und gegebenenfalls die Hubplatte (16) und die Motorplattform (92) hindurchgeführte Betätigungsstange(n) vorgesehen ist/sind.

33. Pipette nach Anspruch 32, dadurch gekennzeichnet, daß die Betätigungsstangen mit dem Abwerfer (90) fest verbunden und mit Federn versehen sind, die den Abwerfer (90) in die Ruhestellung vorspannen.

34. Pipette nach einem der Ansprüche 1 bis 33, dadurch gekennzeichnet, daß der Anschlag, auf den das Stellglied (244) des Abwerfers (90) bei Höhenverstellung der Pipette trifft, ein Festanschlag oder höhenverstellbarer oder vorzugsweise geschaltet in die Bahn des Stellglieds und aus dieser heraus bewegbarer Anschlag (246) ist.

35. Pipette nach einem der Ansprüche 1 bis 34, dadurch gekennzeichnet, daß der Abwerfer (90) und/oder das Stellglied (244) eine Rampe (242) o. ä. aufweisen, derart, daß bei Betätigung des Abwerfers (90) die Pipettenspitzen (88) gestaffelt, insbesondere reihenweise von den Pipettenspitzenhaltern (24) lösbar sind.

36. Pipette nach einem der Ansprüche 1 bis 35, dadurch gekennzeichnet, daß an dem Ständer (202) unterhalb der Pipette ein Wechselmechanismus insbesondere in Form eines horizontalen Drehtellers (232) vorgesehen ist, der eine oder mehrere Halterungen (170) für durch Niederfahren der Pipette entnehmbare Pipettenspitzen (88) tragen kann.

37. Pipette nach Anspruch 36, dadurch gekennzeichnet, daß der Drehteller (232) über eine plane selbstschmierende Gleitschicht an dem Ständer (202) gelagert ist.

38. Pipette nach Anspruch 36 oder 37, dadurch gekennzeichnet, daß der Drehteller (232) federnd an einer planen Anlagefläche (238) abstützbar ist, an der er bei Beaufschlagung mit der niederfahrenden Pipette einfedernd zur Anlage kommt.

39. Pipette nach einem der Ansprüche 36 bis 38, dadurch gekennzeichnet, daß die Halterung (170) mit die Pipettenspitzen (88) im Raster der Pipettenkanäle aufnehmenden Bohrungen (190) versehen ist, in denen eine vorzugsweise abgefederte Ausrichtbewegung der Pipettenspitzen (88) möglich ist.

40. Pipette nach einem der Ansprüche 36 bis 39, dadurch gekennzeichnet, daß die Halterung (170) mit einer im Raster der Bohrungen (190) gelochten dünnen Schicht eines elastischen Materials, vorzugsweise einem Flachgummi (192), belegt ist.

## Claims

1. Multi-channel pipette having a very large number of parallel pump cylinders, in particular ninety-six, and plungers (20) which fit therein and which are coupled in a pattern which corresponds to that of the pump cylinders, in particular an eight by twelve pattern, to form a unit which can be displaced relative to the pump cylinders in the longitudinal direction of the cylinder axes, having conical pipette tip holders (24) at the lower ends of the pump cylinders, onto which pipette tip holders (24) pipette tips (88) can be applied, and having an ejector (90) for the applied pipette tips (88), characterized in that the pump cylinders are designed as apertures (18) in a cylinder block (14), in that the plunger unit can be displaced on parallel guide bars (10) which at the same time perform a support function, in that the whole multi-channel pipette is arranged in a vertically adjustable manner on a stand (202), in that the pipette tips (88) can be applied onto the pipette tip holders (24) from a mounting (170) situated on the base of the stand (202) by relative vertical displacement between cylinder block (14) and mounting (170), preferably by lowering of the whole multi-channel pipette, and in that the ejector (90) has an actuating member (244) which, upon vertical displacement of the multi-channel pipette, strikes a limit stop, so that the ejector (90) is held fast while the pipette tips (88) are ejected.

2. Pipette according to Claim 1, characterized in that it has a frame with four parallel and vertical guide bars (10) which are arranged in a rectangle and on which the cylinder block (14) and a motor platform (92) with a motor for driving the plunger unit are rigidly arranged, and on which the plunger unit is displaceably arranged.

3. Pipette according to Claim 1 or 2, characterized in that the apertures (18) in the cylinder block (14) are stepped, and in that a sealing ring (32) sits on a step (26) and seals the plunger (20).

4. Pipette according to Claim 3, characterized in that the sealing ring (32) is held down and pressed by a spring (36) which is accommodated in the section of greater diameter of the aperture (18).

5. Pipette according to Claim 4, characterized in that the springs (36) of all the apertures (18) or of in each case one row of apertures (18) bear on an abutment, for example in the form of a plate, a web (40) or the like, which is arranged outside on the cylinder block (14) and at least partially covers the apertures.

6. Pipette according to one of Claims 1 to 5, characterized in that conical pipette tip holders (24) sit on the underside of the cylinder block (14) on an axis coffin with the apertures (18), which pipette tip holders (24) have a channel (30) which is preferably tapered with respect to the diameter of the apertures (18), in particular cylindrical or conical.

7. Pipette according to one of Claims 1 to 6, characterized in that the plungers (20) are arranged on a plate (16) which can be motor-driven in the longitudinal direction of the guide bars (10) by means of a screw drive.

8. Pipette according to Claim 7, characterized in that the plungers (20) are arranged rigidly on the plate (16), for which purpose they are stepped in diameter and can be fitted in receiving bores (52) of the plate (16) via a shaft (56) of smaller diameter.

9. Pipette according to Claim 8, characterized in that one end of the shaft (56) projecting from the plate (16) is provided with a thread (60).

10. Pipette according to Claim 7, characterized in that the plungers (20) are arranged on the plate (16) with lateral play for displacement and with all-round play about the vertical.

11. Pipette according to Claim 10, characterized in that the plungers (20) are arranged on the plate (16) with rotational play about their axis.

12. Pipette according to Claim 10 or 11, characterized in that the plungers (20) are acted upon by a spring element which holds the plungers (20) in a normally axially fixed arrangement on the plate (16), but which, in the event of an unusually high running resistance of the plungers (20), for example after a prolonged standstill of the pipette, permits an axial relative movement of plungers (20) and plate (16) by spring deflection.

13. Pipette according to one of Claims 10 to 12, characterized in that the plungers (20) have a shaft (56) which engages with play through a receiving aperture (52) in the plate (16) and which protrudes beyond the plate (16) via its end directed away from the plunger body, and in that the plate has support parts which lie with slight width and preferably radial play about each of the protruding shaft sections, the latter being connected to a bearing which comes to lie in a radially protruding manner on the support part.

14. Pipette according to Claim 13, characterized in that the support parts have all-round displacement play on the plate (16).

15. Pipette according to Claim 13 or 14, characterized in that the support part tapers from the plate (16) towards the bearing.

16. Pipette according to one of Claims 13 to 15, characterized in that the support part is a conical collar (162).

17. Pipette according to one of Claims 13 to 16, characterized in that the bearing is arranged in a detachable manner on the shaft (56) and is formed in particular by a nut (156) screwed onto the shaft (56) or by a retainer ring sitting tightly on the shaft (56).

18. Pipette according to one of Claims 13 to 17, characterized in that the plungers (20) are pretensioned by means of a compression spring (164) so as to bear on the support part.

19. Pipette according to Claim 18, characterized in that the plungers (20) are stepped in diameter, and in that the compression spring (164) lies around the shaft (56) having a smaller diameter than the plunger body (54) and is supported at on end on the step (58) between plunger body (54) and shaft (56) and at the other end on the plate (16).

20. Pipette according to Claim 18 or 19, characterized in that the compression spring (164) is accommodated in a receiving bore (52) of the plate (16).

21. Pipette according to one of Claims 7 to 20, characterized in that the plate (16) is guided on the guide bars (10) with linear ball-bearings (50) or slide-way bushes.

22. Pipette according to one of Claims 7 to 21, characterized in that the screw drive comprises a screw (96) or ball screw.

23. Pipette according to one of Claims 7 to 22, characterized in that the actuation movement of the plate (16) is controlled in a manner which takes into account the lost motion of the screw drive, and, to be specific, preferably on the basis of the running resistance of the plate and/or optoelectronically, for example by means of a light barrier which indicates the zero position of the volumetric measurement in the intake stroke after the lost motion of the spindle drive has been taken up.

24. Pipette according to one of Claims 1 to 23, characterized in that the cylinder block (14) is placed on the guide bars (10) and is arranged firmly and in a detachable manner thereon.

25. Pipette according to one of Claims 1 to 24, characterized in that a motor platform (92) which preferably stabilizes the pipette structure is arranged on the guide bars (10) above the plate (16) and has a motor (94) which is used for driving the plate (16).

26. Pipette according to Claim 25, characterized in that the motor (94) is a direct current motor with reduction gearing and an integrated incremental shaft encoder (100) of high resolution or a step motor, the gear unit (102) of the plate (16) preferably leaving a slight lateral clearance of motion when the gears are engaged.

27. Pipette according to one of Claims 1 to 26, characterized in that an attachment part (12) which fits over a microtitration plate is arranged on the guide bars (10) underneath the cylinder block (14) in a vertically adjustable and lockable manner.

28. Pipette according to Claim 27, characterized in that the attachment part (12) is pretensioned downwards by springs (124) which compensate for the weight of the upper part of the pipette.

29. Pipette according to one of Claims 25 to 28, characterized in that the guide bars (10) are stepped, and in that the motor platform (92) and/or the cylinder block (14) and/or a frame (104) holding the ejector (90) is/are supported, if appropriate with interposition of one or more spacers (216), on a shoulder (212, 214) of the guide bars (10) and can be fixed preferably by means of nuts (208, 218) which can be screwed onto both end portions of the guide bars (10).

30. Pipette according to one of Claims 1 to 29, characterized in that it is arranged on the stand (202) in such a way that it can be vertically adjusted manually or by means of a motor.

31. Pipette according to one of Claims 1 to 30, characterized in that a toggle lever mechanism is provided for the vertical adjustment and comes into an extension position at the bottom point of the pipette.

32. Pipette according to one of Claims 1 to 31, characterized in that the actuating member provided for the ejector (90) is a bracket (244) or one or more actuating bars guided through the cylinder block (14) and, if appropriate, the plate (16) and the motor platform (92).

33. Pipette according to Claim 32, characterized in that the actuating bars are connected firmly to the ejector (90) and are provided with springs which pretension the ejector (90) into the rest position.

34. Pipette according to one of Claims 1 to 33, characterized in that the limit stop which the actuating member (244) of the ejector (90) strikes upon vertical adjustment of the pipette is a fixed limit stop or else a limit stop (246) which can be vertically adjusted or can preferably be connected into the path of the actuating member and moved therefrom.

35. Pipette according to one of Claims 1 to 34, characterized in that the ejector (90) and/or the actuating member (244) have/has a ramp (242) or the like so that, when the ejector (90) is activated, the pipette tips (88) can be detached from the pipette tip holders in a staggered fashion, in particular in rows.

36. Pipette according to one of Claims 1 to 35, characterized in that a shuttle mechanism is provided on the stand (202) underneath the pipette, particularly in the form of a horizontal rotary plate (232) which can carry one or more holders (170) for pipette tips (88) which can be removed by lowering the pipette.

37. Pipette according to Claim 36, characterized in that the rotary plate (232) is mounted on the stand (202) by way of a plane, self-lubricating slide.

38. Pipette according to Claim 36 or 37, characterized in that the rotary plate (232) can be supported resiliently on a plane bearing surface (238) on which it comes to bear when acted upon by the falling pipette.

39. Pipette according to one of Claims 36 to 38, characterized in that the holder (170) is provided with bores (190) which receive the pipette tips (88) in the pattern of the pipette channels and in which a preferably sprung alignment movement of the pipette tips (88) is possible.

40. Pipette according to one of Claims 36 to 39, characterized in that the holder (170) is covered with a thin layer of an elastic material, preferably a flat piece of rubber (192) which is holed in the pattern of the bores (190).

## Revendications

1. Pipette à canaux multiples comportant un très grand nombre de cylindres de pompe parallèles, en particulier au nombre de quatre-vingt-seize, et des pistons (20) ajustés à ces cylindres, lesdits pistons étant accouplés en une unité suivant une grille qui correspond au nombre des cylindres de pompe, en particulier huit fois douze, ladite unité pouvant être déplacée par rapport au cylindre de pompe dans la direction longitudinale de l'axe des cylindres, comprenant des porte-pointes coniques (24) à l'extrémité inférieure des cylindres de pompe, sur lesquels on peut enfiler des pointes de pipette (88), et comprenant un éjecteur (90) pour les pointes de pipette (88) enfilées,
caractérisée en ce que les cylindres de pompe sont réalisés sous la forme d'ouvertures (18) dans un bloc de cylindre (14), en ce que l'unité de piston peut être déplacée sur des tiges de guidage (10) parallèles qui remplissent simultanément une fonction de supportage, en ce que la pipette à canaux multiples entière est montée de façon à pouvoir être réglée en hauteur sur un support (202), en ce que les pointes de pipette (88) sont susceptibles d'être enfichées sur le porte-pointes (24) depuis une monture (170) qui se trouve à la base du support (202) par déplacement vertical relatif entre le bloc de cylindre (14) et la monture (170), par exemple par descente de la pipette à canaux multiples, et en ce que l'éjecteur (90) comporte un organe de positionnement (244) qui vient contre une butée lors du déplacement vertical de la pipette à canaux multiples, de sorte que l'éjecteur (90) est retenu tandis que les pointes de pipette (88) sont éjectées.

2. Pipette selon la revendication 1, caractérisée en ce qu'elle comporte un châssis comprenant quatre tiges de guidage verticales (10) parallèles et agencées suivant un rectangle, sur lesquelles sont agencés de façon rigide le bloc de cylindre (14) et une plate-forme (92) avec un moteur pour l'entraînement de l'unité de pistons, et sur lesquelles est agencée de façon mobile l'unité de pistons.

3. Pipette selon l'une ou l'autre des revendications 1 et 2, caractérisée en ce que les ouvertures (18) dans le bloc de cylindre (14) sont en gradins, et en ce qu'une bague d'étanchéité (32) qui étanche le piston (20) repose sur un gradin (26).

4. Pipette selon la revendication 3, caractérisée en ce que la bague d'étanchéité (32) est repoussée et pressée vers le bas par un ressort (36) qui est reçu dans le tronçon de l'ouverture (18) qui présente le plus grand diamètre.

5. Pipette selon la revendication 4, caractérisée en ce que les ressorts (36) de toutes les rangées d'ouvertures (18) ou d'une rangée respective d'ouvertures (18) s'appuient sur un élément de contre-appui, par exemple sous la forme d'une plaque, d'une languette (40), ou similaire, ménagé à l'extérieur sur le bloc de cylindre (14) et recouvrant au moins en partie les ouvertures.

6. Pipette selon l'une quelconque des revendications 1 à 5, caractérisée en ce qu'à la face inférieure du bloc de cylindre (14) dépassent des porte-pointes coniques (24) sur le même axe que les ouvertures (18), lesdits porte-pointes (24) possédant un canal de préférence rétréci par rapport au diamètre des ouvertures (18), en particulier un canal (30) cylindrique ou conique.

7. Pipette selon l'une quelconque des revendications 1 à 6, caractérisée en ce que les pistons (20) sont montés sur une plaque de levage (16) qui peut être déplacée dans la direction longitudinale des tiges de guidage (10) au moyen d'un entraînement à vis motorisé.

8. Pipette selon la revendication 7, caractérisée en ce que les pistons (20) sont montés de façon rigide sur la plaque de levage (16), ce pourquoi ils peuvent être étagés quant à leur diamètre et reçus de façon ajustée dans des perçages de montage (52) de la plaque de levage (16) au moyen d'un tronc (56) de diamètre plus faible.

9. Pipette selon la revendication 8, caractérisée en ce qu'une extrémité du tronc (56) qui dépasse hors de la plaque de levage (16) est pourvue d'un filetage (60).

10. Pipette selon la revendication 7, caractérisée en ce que les pistons (20) sont montés sur la plaque de levage (16) avec un jeu de déplacement latéral et un jeu d'inclinaison de tous les côtés.

11. Pipette selon la revendication 10, caractérisée en ce que les pistons (20) sont montés sur la plaque de levage (16) avec un jeu en rotation autour de leur axe.

12. Pipette selon l'une ou l'autre des revendications 10 et 11, caractérisée en ce que les pistons (20) sont sollicités par un élément de ressort qui retient les pistons (20) dans un agencement normalement fixe dans le sens axial contre la plaque de levage (16), ledit agencement permettant un mouvement axial relatif des pistons (20) et de la plaque de levage (16) dans le cas d'une résistance inhabituellement élevée des pistons (20) par rapport au déplacement, par exemple après un arrêt prolongé de la pipette, avec cependant une déformation élastique.

13. Pipette selon l'une quelconque des revendications 10 à 12, caractérisée en ce que les pistons (20) possèdent un tronc (56) qui traverse avec jeu une ouverture de montage (52) dans la plaque de levage (16), et qui dépasse au-delà de la plaque de levage (16) par son extrémité détournée du corps de piston, et en ce que la plaque de levage porte des pièces d'appui qui sont disposées en entourant chacune des sections de tronc dépassantes, avec une largeur réduite et de préférence un jeu radial, lesdites sections de tronc étant reliées à un élément d'appui qui vient s'appliquer contre la pièce d'appui en dépassant radialement.

14. Pipette selon la revendication 13, caractérisée en ce que des pièces d'appui possèdent un jeu de déplacement de tous côtés sur la plaque de levage(16).

15. Pipette selon l'une ou l'autre des revendications 13 ou 14, caractérisée en ce que la pièce d'appui va en se rétrécissant depuis la plaque de levage (16) en direction de l'élément d'appui.

16. Pipette selon l'une quelconque des revendications 13 à 15, caractérisée en ce que la pièce d'appui est une bague conique (162).

17. Pipette selon l'une quelconque des revendications 13 à 16, caractérisée en ce que l'élément d'appui est monté de façon détachable sur le tronc (56) et est formé en particulier par un écrou (156) vissé sur le tronc (56), ou une bague élastique montée fermement sur le tronc (56).

18. Pipette selon l'une quelconque des revendications 13 à 17, caractérisée en ce que les pistons (20) sont précontraints par un ressort de compression (164) en contact contre la pièce d'appui.

19. Pipette selon la revendication 18, caractérisée en ce que les pistons (20) sont réalisés avec un diamètre étagé, et en ce que le ressort de compression (164) entoure un tronc (56) qui présente un diamètre plus faible que le corps de piston (54), et s'appuie à une extrémité contre le gradin (58) entre le corps de piston (54) et le tronc (56), et à l'autre extrémité contre la plaque de levage (16).

20. Pipette selon l'une ou l'autre des revendications 18 et 19, caractérisée en ce que le ressort de compression (164) est reçu dans un perçage de montage (52) de la plaque de levage (16).

21. Pipette selon l'une quelconque des revendications 7 à 20, caractérisée en ce que la plaque de levage (16) est guidée sur les tiges de guidage (10) au moyen de paliers à billes linéaires (50) ou de douilles de guidage coulissantes.

22. Pipette selon l'une quelconque des revendications 7 à 21, caractérisée en ce que l'entraînement à vis comporte une broche à vis (96) ou une broche à vis et à billes.

23. Pipette selon l'une quelconque des revendications 7 à 22, caractérisée en ce que le déplacement de réglage de la plaque de levage (16) est commandé d'une manière qui tient en compte la course morte de l'entraînement à vis, et ceci de préférence en fonction de la résistance au déplacement de la plaque de levage, et/ou par voie optoélectronique, par exemple au moyen d'une barrière lumineuse, qui marque la position zéro de la mesure en volume lors de la course d'aspiration, après avoir parcouru la course morte du filetage de l'entraînement à broche.

24. Pipette selon l'une quelconque des revendications 1 à 23, caractérisée en ce que le bloc de cylindre (14) est enfilé sur les tiges de guidage (10) et monté fermement et de façon détachable sur celles-ci.

25. Pipette selon l'une quelconque des revendications 1 à 24, caractérisée en ce qu'au-dessus de la plaque (16) et sur les tiges de guidage (10) est montée une plate-forme à moteur (92), qui stabilise de préférence la structure de la pipette, avec un moteur (94) qui sert à l'entraînement de la plaque de levage (16).

26. Pipette selon la revendication (25), caractérisée en ce que le moteur (94) est un moteur à courant continu et à démultiplication, avec un capteur angulaire intégré (100) à haute définition, ou un moteur pas à pas, l'unité de transmission (102) de la plaque de levage (16) permettant de préférence un léger jeu en déplacement latéral lorsque la liaison de transmission est établie.

27. Pipette selon l'une quelconque des revendications 1 à 26, caractérisée en ce qu'au-dessous du bloc de cylindre (14) une pièce de coiffe (12) est enfilée sur les tiges de guidage (10) de manière à pouvoir être réglée en hauteur et à pouvoir être arrêtée, ladite pièce de coiffe étant ajustée par dessus une plaque de microtitrage.

28. Pipette selon la revendication 27, caractérisée en ce que la pièce de coiffe (12) est précontrainte vers le bas au moyen de ressorts (124) qui compensent le poids de la partie supérieure de la pipette.

29. Pipette selon l'une quelconque des revendications 25 à 28, caractérisée en ce que les tiges de guidage (10) sont en gradins, et en ce que la plate-forme à moteur (92) et/ou le bloc de cylindre (14), et/ou un cadre (104) qui retient l'éjecteur (90) s'appuient contre un épaulement (212, 214) des tiges de guidage (10), le cas échéant avec interposition d'un ou plusieurs éléments d'écartement (216), et peuvent être fixés de préférence au moyen d'écrous (208, 218) qui peuvent être vissés sur les deux tronçons terminaux des tiges de guidage (10).

30. Pipette selon l'une quelconque des revendications 1 à 29, caractérisée en ce qu'elle est montée sur le support (202) de manière à pouvoir être réglée en hauteur manuellement ou de façon motorisée.

31. Pipette selon l'une quelconque des revendications 1 à 30, caractérisée en ce qu'il est prévu un mécanisme à levier à genouillère pour le réglage en hauteur, ledit mécanisme parvenant en situation d'extension au point le plus profond de la pipette.

32. Pipette selon l'une quelconque des revendications là 31, caractérisée en ce qu'on prévoit en tant qu'organe de réglage de l'éjecteur (90) une patte (244) ou une ou plusieurs tiges d'actionnement qui traversent le bloc de cylindre (14) et le cas échéant la plaque de levage (16) et la plateforme à moteur (92).

33. Pipette selon la revendication 32, caractérisée en ce que les tiges d'actionnement sont rigidement reliées à l'éjecteur (90) et sont pourvues de ressorts qui précontraignent l'éjecteur (90) dans la position de repos.

34. Pipette selon l'une quelconque des revendications 1 à 33, caractérisée en ce que la butée que l'organe de réglage (244) de l'éjecteur (90) atteint lors du réglage en hauteur de la pipette, est une butée fixe ou une butée mobile (246) réglable en hauteur, ou une butée qui peut être de préférence amenée dans le trajet de l'organe de réglage et hors de ce trajet.

35. Pipette selon l'une quelconque des revendications 1 à 34, caractérisée en ce que l'éjecteur (90) et/ou l'organe de réglage (244) comporte une rampe (242), ou analogue, de telle manière que lors de l'actionnement de l'éjecteur (90) les pointes de pipette (88) peuvent être détachées en séquence, en particulier par rangées par rapport aux porte-pointes (24).

36. Pipette selon l'une quelconque des revendications 1 à 35, caractérisée en ce qu'un mécanisme d'échange est prévu sur le support (202) au-dessous des pipettes, en particulier sous la forme d'une plaque tournante horizontale (232) qui est capable de porter une ou plusieurs montures (170) pour des pointes de pipette (88) susceptibles d'être extraites par descente de la pipette.

37. Pipette selon la revendication 36, caractérisée en ce que la plaque (232) est montée sur le support (202) au moyen d'une couche de coulissement plane autolubrifiante.

38. Pipette selon l'une ou l'autre des revendications 36 et 37, caractérisée en ce que la plaque tournante (232) s'appuie de façon élastique contre une surface d'appui plane (238), contre laquelle elle vient en contact élastique lors d'une sollicitation, avec la pipette déplacée vers le bas.

39. Pipette selon l'une quelconque des revendications 36 à 38, caractérisée en ce que la monture (170) est pourvue de perçages qui reçoivent les pointes de pipette (88) suivant la grille des canaux de pipette, dans lesquels peut se produire un mouvement d'alignement des pointes de pipette (88), de préférence avec amortissement élastique.

40. Pipette selon l'une quelconque des revendications 36 à 39, caractérisée en ce que la monture (170) est recouverte d'une couche mince de matériau élastique, de préférence de caoutchouc plat (192), percée suivant la grille des perçages (190).
